# EUROPEAN PATENT APPLICATION

(11) **EP 4 806 609 A1**
(43) Date of publication of application: **16.09.2026**
(21) Application number: 26172160.9
(22) Date of filing: 18.02.2021
(51) Int. Cl.: B27N 1/02, B27N 1/00, B27N 3/02, B27N 3/04

(54) **ENGINEERED WOOD ADHESIVES AND ENGINEERED WOOD THEREFROM**

(30) Priority: 21.02.2020 US 202062979961 P
(62) Document number(s) of the earlier application(s) in accordance with Art. 76 EPC: 21756914.4 / 4 106 965
(71) Applicant: Cargill, Incorporated, Wayzata, Minnesota 55391 (US)
(72) Inventor: ANDERSON, Kevin, Cedar Rapids, 52405 (US); MARKLAND, JR, Flave Eugene, Atkins, 52206 (US); ZHOU, Shuang, Marion, 52302 (US)
(74) Representative: Forresters IP LLP

(57) **Abstract**

The present disclosure provides an engineered wood precursor mixture. The mixture includes a wood substrate(s) and a binder reaction mixture present in a range of from 3 to 25 parts per one hundred (100) parts of the dry weight of the wood substrate. The binder composition includes an aqueous portion. The aqueous portion includes a carbohydrate-containing component, including glucose, fructose, sucrose, or mixture thereof, in a range of from 2 wt% to 85 wt% based on a dry weight of the binder reaction mixture. The aqueous portion further includes 1 wt% to 33 wt% of a base based on a dry weight of the binder reaction mixture, wherein a pH of the aqueous portion is greater than 10. The binder composition further includes a partially non-dissolved polypeptide-containing component, in a range of from 20 wt% to 85 wt% based on the dry weight of the binder reaction mixture.

## Description

### CROSS-REFERENCE TO RELATED APPLICATION

This application claims the benefit of priority to U.S. Provisional Patent Application Serial No. 62/979,961, filed February 21, 2020, entitled "ENGINEERED WOOD ADHESIVES AND ENGINEERED WOOD THEREFROM", the disclosure of which is incorporated herein in its entirety by reference.

### BACKGROUND

The most commonly used wood adhesives are phenol-formaldehyde resins (PF) and urea-formaldehyde resins (UF). There are at least two concerns with PF and UF resins. First, volatile organic compounds (VOC) are generated during the manufacture and use of lignocellulosic-based composites. An increasing concern about the effect of emissive VOC, especially formaldehyde, on human health has prompted a need for more environmentally acceptable adhesives. Second, PF and UF resins are made from petroleum-derived products. The reserves of petroleum are naturally limited. The wood composite industry would greatly benefit from the development of formaldehyde-free adhesives made from renewable natural resources.

### SUMMARY OF THE DISCLOSURE

The present disclosure provides an engineered wood precursor mixture. The mixture includes a plurality of wood substrates and a binder reaction mixture present in a range of from 3 to 25 parts per one hundred (100) parts of the dry weight of the wood substrate. The binder composition includes an aqueous portion. The aqueous portion includes a carbohydrate-containing component in a range of from 2 wt% to 85 wt% based on a dry weight of the binder reaction mixture. The carbohydrate-containing component includes glucose, fructose, sucrose, or a mixture thereof and the combined wt% of glucose, fructose, sucrose, or mixture thereof in the carbohydrate-containing component is at least 60 wt%. The aqueous portion further includes 1 wt% to 33 wt% of a base based on a dry weight of the binder reaction mixture. A pH of the aqueous portion of the binder reaction mixture is greater than 10, for example 10.5, 11, 11.5, 12, 12.5, 13, 13.5, or 14, or for example, 10 to 14 or 11 to 14. The binder composition further includes an at least partially non-dissolved polypeptide-containing component selected from soy flour, wheat gluten, or a combination thereof, in a range of from 20 wt% to 85 wt% based on the dry weight of the binder reaction mixture.

The present disclosure further provides an engineered wood comprising a reaction product of an engineered wood precursor. The mixture includes a plurality of wood substrates and a binder reaction mixture present in a range of from 3 to 25 parts per one hundred (100) parts of the dry weight of the wood substrates. The binder composition includes an aqueous portion. The aqueous portion includes a carbohydrate-containing component in a range of from 2 wt% to 85 wt% based on a dry weight of the binder reaction mixture. The carbohydrate-containing component includes glucose, fructose, sucrose, or a mixture thereof and the combined wt% of glucose, fructose, sucrose, or mixture thereof in the carbohydrate-containing component is at least 60 wt%. The aqueous portion further includes 1 wt% to 33 wt% of a base based on a dry weight of the binder reaction mixture, wherein a pH of the aqueous portion of the binder reaction mixture is greater than 10, for example 10.5, 11, 11.5, 12, 12.5, 13, 13.5, or 14, or for example, 10 to 14 or 11 to 14. The binder composition further includes an at least partially non-dissolved polypeptide-containing component selected from soy flour, wheat gluten, or a combination thereof, in a range of from 20 wt% to 85 wt% based on the dry weight of the binder reaction mixture.

The present disclosure further provides a method of making a engineered wood including a reaction product of an engineered wood precursor. The mixture includes a plurality of wood substrates and a binder reaction mixture present in a range of from 3 to 25 parts per one hundred (100) parts of the dry weight of the wood substrates. The binder composition includes an aqueous portion. The aqueous portion includes a carbohydrate-containing component in a range of from 2 wt% to 85 wt% based on a dry weight of the binder reaction mixture. The carbohydrate-containing component includes glucose, fructose, sucrose, or a mixture thereof and the combined wt% of glucose, fructose, sucrose, or mixture thereof in the carbohydrate-containing component is at least 60 wt%. The aqueous portion further includes 1 wt% to 33 wt% of a base based on a dry weight of the binder reaction mixture, wherein a pH of the aqueous portion of the binder reaction mixture greater than 10, for example 10.5, 11, 11.5, 12, 12.5, 13, 13.5, or 14, or for example, 10 to 14 or 11 to 14. The binder composition further includes an at least partially non-dissolved polypeptide-containing component selected from soy flour, wheat gluten, or a combination thereof, in a range of from 20 wt% to 85 wt% based on the dry weight of the binder reaction mixture. The method includes (a) mixing the carbohydrate-containing component and the base to produce a first mixture. The method further includes mixing the mixture produced at (a) with the plurality of wood substrates to obtain a second mixture. The mixture further includes (c) mixing the mixture produced at (b) with the polypeptide-containing component to form a third mixture. The method further includes (d) curing the third mixture formed at (c) to form the engineered wood.

The binder reaction mixtures can include further optional components as described herein below. For example, the binder reaction mixtures can include an optional borax, an optional sodium sulfite, an optional sodium bisulfite, an optional sodium metabisulfite, or a mixture thereof.

An engineered wood formed from the binder reaction mixture can be cured at temperatures in a range of 100 °C to 250 °C or from 100 °C to 225 °C, for example, from 145 °C to 225 °C or from 160 °C to 220 °C.

### BRIEF DESCRIPTION OF THE FIGURES

The drawings illustrate generally, by way of example, but not by way of limitation, various embodiments discussed in the present document.
FIG. 1 is a plot the composition changes in the amounts of fructose and dextrose present in an example aqueous portion of the binder over time on dry basis.
FIG. 2 shows an output from a high performance liquid chromatography study showing the composition changes in the amounts of fructose and dextrose present in an example aqueous portion of the binder over time on dry basis.

### DETAILED DESCRIPTION

Reference will now be made in detail to certain embodiments of the disclosed subject matter. While the disclosed subject matter will be described in conjunction with the enumerated claims, it will be understood that the exemplified subject matter is not intended to limit the claims to the disclosed subject matter.

In this document, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

The term "substantially" as used herein refers to a majority of, or mostly, as in at least about 90%, 95%, 99.5%, or 100%. The term "substantially free of" as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or about 0 wt%.

According to various aspects of the instant disclosure, an engineered wood product is described. The engineered wood product can typically take the form of a particle board, medium density fiber board, high density fiberboard, oriented strand board, engineered wood flooring, and combinations thereof. The engineered wood product can be sized to have any suitable dimensions. For example, the engineered wood product can be sized. For example, the engineered wood product can be sized to be 1.2 meters wide and 2.6 meters long, or 1.3 meters wide and 2.1 meters long. These dimensions are merely meant to be examples and do not limit the sizes of engineered wood products that can be produced.

The engineered wood product can typically include a variety of constituents. For example, the engineered wood product can typically include a plurality of wood substrates bound together by a binder that is a reaction product of a binder reaction mixture including an at least partially non-dissolved polypeptide component distributed about the binder reaction mixture. In the engineered wood product, the binder that is the reaction product of the binder reaction mixture, can typically be present in a range of from 3 parts to 25 parts per 100 parts of the dry weight of the wood substrates, for example from 4.5 parts to 23.5 parts, 3 parts to 20 parts, or 8 parts to 17 parts per one hundred (100 parts of dry weight of the wood substrates. Having levels of binder in these ranges can contribute to the engineered wood product having favorable or desirable physical properties, while effectively minimizing the amount of binder that is needed to bind the plurality of wood substrates. The binder can be characterized as a biopolymer.

Examples of desirable physical properties of the engineered wood products can include the product's modulus of rupture (MOR), Modulus of Elasticity (MOE), Thickness Swell Percent (Thickness swell%) as measured for example in Working Example 3, or a combination thereof. The modulus of rupture of the engineered wood product measures the amount of force required to result in rupturing the engineered wood product. The modulus of rupture can be measured, for example, according to ASTM D1037-99. While the modulus of rupture value can depend on a variety of factors, including the engineered wood product's density, length, width, thickness, or a combination thereof, the modulus of rupture can generally be in a range of from 0.5 N/mm² to 25 N/mm² or from 2 N/mm² to 22 N/mm².

The modulus of elasticity is a quantity that measures engineered wood product's resistance to being deformed elastically (e.g., non-permanently) when a stress is applied to it. The modulus of elasticity can be measured, for example, according to ASTM D1037-99. While the modulus of elasticity value typically depends on a variety of factors, including the engineered wood product's density, length, width, thickness, or a combination thereof, the modulus of elasticity can be in a range of from 200 N/mm² to 3000 N/mm² or from 500 N/mm² to 2750 N/mm².

The thickness swell% is a quantity the measures the engineered wood product's resistivity to water penetration. The higher the value, the greater the amount of water that is penetrated. This can result in the engineered wood product swelling or otherwise deforming. For example, the engineered wood product may expand past a desired amount. This can be undesirable, if the engineered wood product has precise features such as bore holes, flanges, grooves, or the like, that are designed to fit precisely with a corresponding feature on another product. The thickness swell% value can be measured, for example, according to ASTM D1037-99. According to some aspects, the thickness swell% after soaking the engineered wood in water for two hours can be as low as zero. However, other acceptable values include those in a range of from 5% to 45% or from 20% to 40%, measured after soaking the engineered wood in water for two hours

A benefit, of using the engineered wood products formed using the materials and methods described herein, is that the properties of the engineered wood products, typically are generally comparable to those of a corresponding engineered wood product differing in that it uses a urea-formaldehyde (UF) binder. Urea-formaldehyde resin is a synthetic resin produced by the chemical combination of formaldehyde (a gas produced from methane) and urea (a solid crystal produced from ammonia). Urea-formaldehyde resins are used mostly for gluing plywood, particleboard, and other wood products. Urea-formaldehyde resins polymerize into permanently interlinked networks which are influential in the strength of the cured adhesive. After setting and hardening, urea-formaldehyde resins form an insoluble, three-dimensional network and cannot be melted or thermo-formed.

However, there are a number of disadvantages associated with using urea-formaldehyde. For example, addition of water, in high temperature, cured urea-formaldehyde can hydrolyze and release formaldehyde, this weakens the glue bond and can be toxic. Moreover, urea-formaldehyde must be used in a well ventilated area because uncured resin is irritating and can be toxic. Additionally, urea-formaldehyde adhesives generally have a limited shelf life.

The materials described herein can address at least some of these drawbacks and, in particular, prevent the outgassing of substantially any formaldehyde. Moreover, according to various aspects, the modulus of rupture, the thickness swell%, modulus of elasticity, or a combination thereof of the engineered wood can be substantially similar to a modulus of elasticity, modulus of rupture, a thickness swell%, or a combination thereof of a corresponding engineered wood differing in that the reaction product comprises urea-formaldehyde, or a mixture thereof. More specifically, the thickness swell%, modulus of elasticity, modulus of rupture or a combination thereof of the engineered wood can be within 1% to 10%, 1% to 5%, or is substantially identical to the modulus of elasticity, modulus of rupture, the thickness swell%, or a combination thereof of the corresponding engineered wood. However, in further aspect modulus of elasticity, modulus of rupture, the thickness swell%, or a combination thereof can be within 50% to 150% of the corresponding engineered wood.

The properties of the engineered wood products described herein can be further achieved or enhanced for example by distributing the binder such that it is substantially homogenously distributed about the plurality of wood substrates. Other properties such as the thickness swell% can typically be achieved or enhanced by adding a swell-retardant agent such that it is distributed about the engineered wood. The swell-retardant agent can include a wax emulsion that can sustain (e.g., remain stable) a high pH environment that is greater than 10. Where present, the swell-retardant can be from 0.1 wt% to 1 wt% or from 0.5 wt% to 0.7 wt% of the engineered wood product.

Although the engineered wood product has been described as a singular object, it is within the scope of this disclosure for the engineered wood product to be a component of a larger structure. For example, the engineered wood product can be part of a laminate structure where the engineered wood product constitutes an inner or outer layer of the laminate structure. The engineered wood product can be in contact with a core structure (e.g., a wood, plastic, or metal core) or another engineered wood product that has a substantially identical construction or a different construction.

The engineered wood described herein is formed from an engineered wood precursor mixture. The engineered wood precursor mixture includes a least a plurality of wood substrates, an aqueous portion of a binder reaction mixture and a peptide-containing component distributed about the binder reaction mixture. The plurality of wood substrates can include one or more wood particles, one or more wood substrates, or one or more wood strands. The wood substrates can include a wood material such as pine, hemlock, spruce, aspen, birch, maple, or mixtures thereof.

Relative to the plurality of wood substrates, the binder reaction mixture can typically be present in a range of 3 to 25 parts per one hundred (100) parts of the dry weight of the wood substrates. The binder composition can typically include a carbohydrate-containing component, and a base material. Furthermore, a polypeptide containing component can be distributed about the binder reaction mixture after the carbohydrate, base and wood substrate(s) are mixed. The polypeptide containing component can typically be substantially non-dissolved.

The carbohydrate-containing component can be in an aqueous form in a range of from 2 wt% to 85 wt% based on a dry weight of the binder reaction mixture or from 15 wt% to 65 wt%. The carbohydrate-containing component includes glucose, fructose, sucrose, or a mixture thereof. In the carbohydrate component, the combined wt% of glucose, fructose, sucrose, or mixture thereof in the carbohydrate component is at least 60 wt%. In some aspects, the carbohydrate component includes a glucose syrup, high fructose corn syrup, a sucrose containing composition, or a mixture thereof. In some aspects the carbohydrate component includes a monosaccharide such as glucose, fructose or mixtures thereof and the total weight percent of glucose and fructose is in the range of 20 wt% to 60 wt% based on dry weight of the binder reaction mixture. In some aspects, the carbohydrate component includes a glucose syrup having a dextrose equivalent (DE) of at least 60, at least 80, at least 85, at least 90, or at least 95. As understood herein, dextrose equivalent is a measure of the amount of reducing sugars present in a sugar product, expressed as a percentage on a dry basis relative to dextrose. In some further aspects, the carbohydrate-containing component includes a high fructose corn syrup comprising at least 90 wt% fructose and glucose. In some aspects, the high fructose corn syrup can include at least 94 wt% fructose and glucose. In some aspects, the high fructose corn syrup includes from 30 wt% to 70 wt% glucose or from 35 wt% to 65 wt% glucose.

Typically, the carbohydrate(s) of the carbohydrate-containing component will be a carbohydrate that has at least one reducing group (the reducing group can be a reducing end group in some aspects). It is possible for the carbohydrate component to have a mixture of carbohydrates with a reducing group and carbohydrates without a reducing group too, but in these cases there are likely to be at least some carbohydrates with a reducing group. The reducing group(s) (e.g., aldehyde group(s), ketone group(s), or a mixture thereof) available on the carbohydrates allows for a bond to formed between it and an amine group of the polypeptide component during curing to form a biopolymer or network thereof. It was found that using monosaccharides in the carbohydrate-containing component, in particular, led to improvement in the thickness swell%, modulus of rupture, and modulus of elasticity of the resulting engineered wood.

The base can typically be present in the binder reaction mixture in a range of from 1 wt% to 33 wt% or 5 wt% to 10 wt% based on a dry weight of the binder reaction mixture. The base can typically be added to such a degree that a pH of the aqueous portion of the binder reaction mixture is greater than 10, for example 10.5, 11, 11.5, 12, 12.5, 13, 13.5, or 14. The pH therefore is typically in a range of from 10 to 14 or 11 to 14. Typically, the base includes NaOH, magnesium oxide, or mixtures thereof. In some aspects, the base includes solely NaOH. It was found that using a base to achieve these pH values, in particular, led to improvement in the thickness swell%, modulus of rupture, and modulus of elasticity of the resulting engineered wood.

While not intending to be limited to any theory, it is believed that the base, at the disclosed concentration results in the high pH environment enhances the reaction between the carbohydrate-containing component, polypeptide-containing component, and wood substrate to form a biopolymer network enveloping the wood substrate. For example, it is believed that the base can help to dissolve at least a portion of individual wood substrates. This, in turn, allows the binder precursor solution to penetrate at least partially into the interior of the individual wood substrate. Therefore, when the binder precursor is subjected to curing a greater degree of interlocking between the binder and the individual wood substrates can be achieved. The relatively high pH cannot be used in conjunction with a process that is used to produce a Maillard reaction product, which typically cannot tolerate a pH higher than 10, such as found in US Patent No. 8,501,838.

The precursor further includes an at least partially non-dissolved polypeptide-containing component distributed about the carbohydrate-containing component and wood substrate. The concentration of polypeptide-containing component is measured based on the dry weight of the binder reaction mixture. The concentration of the polypeptide-containing component can typically be in a range of from 20 wt% to 85 wt%, 30 wt% to 80 wt%, or 40 wt% to 65 wt%.

The polypeptide-containing component can typically include a protein sourced from an animal protein, a casein salt, a plant protein, a soy flour, linseed flour, flaxseed flour, cottonseed flour, canola flour, sunflower flour, peanut flour, lupin flour, pea flour, and mixtures thereof. In some aspects the polypeptide-containing component includes a protein sourced from soy flour, wheat gluten, or a combination thereof. In some aspects, the polypeptide-containing component includes a protein sourced from soy flour. The soy flour can be from 40 wt% to 65 wt% or 50 wt% to 60 wt%, protein based on the total soy flour present. Where the polypeptide-containing component is a mixture such as a flour, it is possible for it to include non-protein constituents such as a carbohydrate. In these instances, the disclosed concentrations of the carbohydrates in the binder precursor, or reaction product thereof, are independent of the amount of carbohydrate present from the polypeptide-containing component. It has been surprisingly and unexpectedly found that mixtures including soy flour produce engineered wood products having better properties than a corresponding engineered wood formed with constituents having higher percentages of protein.

In certain aspects, where the polypeptide-containing component includes soy flour, the soy flour can have a protein dispersibility index of at least 60. For example, a protein dispersibility index of the soy flour can be in a range of from 70 to 95, for example a PDI from 80 to 90. If it is desired to screen the polypeptide-containing component by size, the component can be selected from one that passes through a screen sized 100-mesh screen to a 635-mesh screen or a 100-mesh screen to a 400-mesh screen, for example a screen size can be from 150 to 325.

In certain aspects, the engineered wood precursor mixture can include sodium sulfite, sodium bisulfite, sodium metabisulfite or a mixture thereof. Where present, the sodium sulfite, sodium bisulfite, sodium metabisulfite, or a mixture thereof is in a range of from 1 wt% to 10 wt% or from 1 wt% to 5 wt%, based on the dry weight of the binder reaction mixture. Including sodium sulfite, sodium bisulfite, sodium metabisulfite, or a mixture thereof can help to increase the strength of the resulting engineered wood product. For example, they can help to increase the modulus of rupture, modulus of elasticity, or both of the engineered wood, relative to a corresponding engineered wood that is free of sodium sulfite, sodium bisulfite, sodium metabisulfite, or a mixture thereof. However, in certain aspects, including sodium sulfite, sodium bisulfite, sodium metabisulfite, or a mixture thereof can increase the sulfur content of the engineered wood, which may be detrimental for certain applications.

According to various aspects, the aqueous portion can further include a borax. The term *borax* is often used for a number of closely related minerals or chemical compounds that differ in their crystal water content. Examples of suitable borax compounds include sodium tetraborate decahydrate (or sodium tetraborate octahydrate), sodium tetraborate pentahydrate, anhydrous sodium tetraborate, and mixtures thereof. Where present the borax can be in a range of from 1 wt% to 15 wt% based on the dry weight of the binder reaction mixture or 3 wt% to 6 wt%.

As described previously, the binder is substantially free of a urea-formaldehyde. Therefore, the precursors described herein are also free of a urea-formaldehyde. For example, the mixture can typically include less than 5 wt% of urea-formaldehyde or be substantially free of urea-formaldehyde.

The moisture content of the mixture of the binder and the plurality of wood substrates can be carefully controlled. For example, the moisture content typically is in a range of from 7% to 25%, 7% to 20%, 8% to 15% or in a range of from 10% to 13%. The moisture content can affect the ability to disperse the components of the mixture about the wood substrates and the reactivity of the substrates. The moisture content can be tuned, for example by increasing or decreasing the moisture content in the binder. For example, if the moisture content in the wood is low the moisture content in the binder can be increased to bring the total moisture content of the mixture of the binder and plurality of wood substrates to a desired level. In some aspects moisture can be added to the binder by spraying water to the binder distributed on the wood substrates. However, in certain aspects, water can simply be added to the carbohydrate-containing component before it is applied to the wood substrate. This can give better distribution of the moisture across the mixture of binder and wood substrates.

The engineered wood described herein can be made or manufactured according many suitable methods. As an example, a method can include (a) mixing the carbohydrate-containing component and the base and optionally borax, optionally sodium sulfite, optionally sodium bisulfite, optionally sodium metabisulfite or an optional mixture thereof to produce a first mixture.

After the carbohydrate-containing component and base are sufficiently mixed, the method can further include (b) mixing the mixture produced at (a) with the plurality of wood substrates to obtain a second mixture. To help to achieve a uniform blend, mixing at (b) is typically performed by spraying the carbohydrate-containing component and base to the plurality of wood substrates. The spraying and mixing can typically occur for a time in a range of from 1 minute to 60 minutes or 1 minute to 10 minutes. It was found that increased mixing times resulted in stronger engineered woods.

After mixing at (b) is performed, the method further includes (c) mixing the mixture produced at (b) with the polypeptide-containing component to form a third mixture. The polypeptide-containing component at this stage can be in a powder form. It has been found that the properties of the resulting engineered wood (e.g., modulus of rupture, modulus of elasticity, thickness swell%, or a combination thereof) are better when the polypeptide-containing component is in powder form as opposed to a dispersion form.

Before performing step (b), the first mixture obtained at (a) can be used immediately. However, the first mixture obtained at (a) can also be aged for example, for at least 1 hour, or at least 12 hours. And surprisingly and unexpectedly it has been found that the mixture obtained at (a) can effectively be use when aged for 26 hours or greater before performing (b), for example, the first mixture can be aged for at least 50 hours, at least 120 hours, at least 360 hours, at least 1400 hours, at least 2000 hours, from 26 hours to 1400 hours, or from 50 hours to 360 hours before performing (c). These times can be reduced by heating the mixture. The step at (c) is typically performed for at least 1 minute, for example in a range of from 1 minute to 60 minutes or from 1 minute to 10 minutes.

Before performing step (d), the third mixture formed during step (c) exhibits tack properties comparable or improved relative to alternative binder systems (e.g., those using a urea-formaldehyde binder). Tack is the adhesive property that imparts upon the materials being bound, the ability to lightly stick together with gentle pressure. Tack is typically an important property for maintaining the shape and distribution of wood fibers within the mattress during initial formation throughout the particleboard manufacturing process. Increasing the carbohydrate-containing component portion of the aqueous portion of the binder reaction mixture during step (b) appears to visually improve the tack properties of the resulting binder reaction mixture.

After mixing at step (c) is performed, the method further includes (d) curing the third mixture formed at (c) to form the engineered wood. Curing can include (e) hot pressing the binder reaction mixture formed at (d). Hot pressing at (e) is performed at a pressure of at least 5 psi and at most 500 psi, from 5 psi to 450 psi, or from 30 psi to 400 psi. In addition to the pressure, a platen of the press used for hot pressing at (e) is heated to a temperature in a range of at least 100 °C, for example, at least 120 °C, in a range of from 100 °C to 150 °C, or in a range of from 120 °C to 125 °C, or in a range of 120 °C to 190 °C, or in a range of 100 °C to 250 °C, in a range of from 120 °C to 225 °C, or in a range of from for example, from 145 °C to 225 °C or from 160 °C to 220 °C, or at least 187 °C. In some examples, the platen is heated to less than 250 °C, preferably less than 230 °C, less than 225 °C, less than 200 °C, less than 190, or less than 180 °C. The method can further include a "cold pressing" step that can occur before or after the hot pressing. Cold pressing can occur at ambient temperatures.

Any of the swell-retardant components described herein can be added to the wood substrate at any point during the method at step (a), (b), (c), or a combination thereof. Similarly, sodium sulfite, sodium bisulfite, sodium metabisulfite or a mixture thereof can be added to the method at step (a), (b), (c), or a combination thereof.

It has been found however, that performing at least steps (a), (b), and (c) in sequential order improves the properties in the engineered wood. Specifically, the modulus of rupture, modulus of elasticity, and thickness swell% in the resulting engineered wood are improved as compared to corresponding engineered woods formed in a different order. Without intending to be bound to any theory, it is believed that performing these steps in order helps to achieve an even spread of the carbohydrate-containing component on the wood substrate. Moreover, the carbohydrate-containing component is at least partially embedded into the wood substrate by virtue of the base creating openings in the wood substrate. Thus, when the polypeptide-containing component comes into contact with the carbohydrate-containing component, the reaction between the two is uniform. It was found that including the polypeptide-containing component along with the wood substrate, base, ( and optionally borax, optionally sodium sulfite, optionally sodium bisulfite, optionally sodium metabisulfite or an optional mixture thereof) and carbohydrate-component in one step reduced the thickness swell%, modulus of rupture, and modulus of elasticity of the resulting engineered wood.

### WORKING EXAMPLES

Various aspects of the present disclosure can be better understood by reference to the following Working Examples which are offered by way of illustration. The present disclosure is not limited to the Working Examples given herein. Unless indicated to the contrary, Parts Binder Reaction Mixture per 100 parts dry weight wood fibers (WF) refers to the parts dry binder reaction mixture per 100 parts of the dry weight of the wood fiber; the wood used in the examples had a moisture content of from about six percent by weight (6 wt%) to about nine weight percent (9 wt%); and % NF-FR, %NaOH, % Prolia 200/90, % carbohydrate-containing component, % monosaccharide, etc. refer to dry weight percent of the indicated component based on the total dry weight of the binder reaction mixture. Values described herein as a % or wt% refer to the dry wt% of the component excluding water based on the dry weight of the composition, excluding water.

### Materials

| **Name** | **Supplier** |
|---|---|
| Fructose dry powder (NF-FR) | A 100 wt% fructose powder available from Now Foods, Bloomingdale, IL |
| Glucose | Available from Arcos Organics, New Jersey |
| Maltose | Available from Alfa Aesar, Haverhill, MA |
| MAGOX 98LR | A magnesium oxide, available from Premier Magnesia, Waynesville, NC |
| D-(+)-Lactose, Monohydrate (Lactose) | Available from JT Baker Chemical, Phillipsburg, NJ |
| Sucrose | Available from Alfa Aesar |
| IsoClear 42% | A high fructose corn syrup including 43% fructose and 52% glucose, available from Cargill, Incorporated, Wayzata, MN |
| IsoClear 55% | A high fructose corn syrup including 56% fructose and 40% glucose, available from Cargill, Incorporated, Wayzata, MN |
| Corn Syrup 43DE | A corn syrup having a dextrose equivalent number of 43, available from Cargill, Incorporated, Wayzata, MN |
| Corn Syrup 63DE | A corn syrup having a dextrose equivalent number of 63, available from Cargill, Incorporated, Wayzata, MN |
| Maltodextrin 1910 | A maltodextrin having a DE of 10, available from Cargill, Incorporated, Wayzata, MN |
| Prolia 200/90 | A soy flour having protein content of 52.5% and a 200 mesh particle size and a polydispersity index (PDI) of 90, available from Cargill, Incorporated, Wayzata, A soy flour, available from Cargill, Incorporated, Wayzata, MN |
| Prolia 200/70 | A soy flour having a protein content of 51% and a 200 mesh particle size and a PDI of 70, available from Cargill, Incorporated, Wayzata, MNA soy flour, available from Cargill, Incorporated, Wayzata, MN |
| Prolia 325/90 | A soy flour having a protein content of 53.8 % and a 325 mesh particle size and a PDI of 90 |
| Prolia 200/20 | A soy flour having a protein content of about 51% and a 200 mesh particle size and a PDI of 20, available from Cargill, Incorporated, Wayzata, MN. |
| Corn Meal | A corn product having a protein content for 7-9% available from Cargill, Incorporated, Wayzata, MN |
| Zein | A water-insoluble protein-product having a protein content of 81.9-100% obtained from corn, available from Flo Chemical Corporation, Ashburnham, MA [ |
| Empyreal | A high-protein (76.2%) corn concentrate, available from Cargill, Incorporated, Wayzata, MN |
| Wheat Flour | A wheat flour having a protein content of 8-13%, available from Cargill, Incorporated, Wayzata, MN |
| PurisPea 870 | A 77.7% protein containing pea flour, available from Cargill, Incorporated, Wayzata, MN |
| Pea Protein 55% | A 55% protein containing pea flour |
| Casein | A phosphoprotein in an amount of 67-78%, available from Thermal Scientific, Corpus Christi, TX |
| Casein sodium salt | A phosphoprotein salt having a protein content of 90%, available from Alfa Aesar, Haverhill, MA |
| Whey Protein Isolate | Available from BiProUSA having a protein content of 8-13%, Eden Prairie, MN |
| Gluvital | A wheat gluten having a protein content of 40%, available from Cargill, Incorporated, Wayzata, MN |
| C*HyProw | A soluble wheat gluten having a protein content greater than or equal to 84%, available from Cargill, Incorporated, Wayzata, MN |
| Defatted Milk Powder | Available from Land-O-Lakes, Arden Hills, MN |
| Albumin | An egg albumin having a protein content of at least 68%, available from Aqua Solution, Deer Park, TX |
| UF | A urea-formaldehyde resin (UF) available under the trade name WELDWOOD UF, available from DAP, Baltimore, MD |
| Wood Fiber (WF) | Wood Fibers, available under the trade designation MINI FLAKE, available form America's Choice, Columbia, MD |

### Working Example 1: Binder Preparation and Preparation of Engineered Wood

A pre-weighed amount of water (W_{A}) and 50% alkaline solution such as an NaOH solution are mixed to form a diluted NaOH solution, which is allowed to cool down to around 25-30 °C. A carbohydrate-containing component such as a 75% fructose solution is slowly added to the diluted NaOH solution. After completing the addition of fructose solution, the aqueous portion of the binder reaction mixture is placed on a shaker for 5 minutes. With respect to the W_{A}, the total water content of the binder and wood fiber (WF) is targeted at 12.5%. The ratio of the dry binder to dry wood fiber is 13:100 (e.g., 13 parts per 100 parts of dry WF). The water content to be added to the aqueous portion of the binder reaction mixture is calculated based on the third mixture moisture content, the wood fiber moisture and total binder moisture content

The moisture content of wood fiber and polypeptide are measured by a Mettler Toledo moisture balance at 130 °C. W_{A} is determined according to Equation 1: ${W}_{A} = {W}_{T} - {W}_{WF} - {W}_{BF}$
W_{A}: Water to be added to the aqueous portion of the binder reaction mixture
W_{T}: Total moisture of the third mixture
W_{WF}: Water in wood fiber
W_{BF:} Water in the binder ingredients including water in carbohydrates, NaOH and polypeptides

The carbohydrate and alkaline solution above was sprayed to the wood fiber and mixed for 5 minutes followed by the addition of the polypeptide-containing component in a powder form. The mixture of the wood fiber and the binder was then blended for 2 minutes.

A mold conforming to the desired dimensions of the engineered wood is heated in a hot press. The hot press is set at 130 °C to maintain working conditions between 120-125 °C. Typical platen temperatures are 120 °C. After the mixture of the binder and the wood fiber described is formed it is transferred to the mold. The mold is inserted into Carver Hydraulic Press cold section and a jack handle is used to add pressure that is maintained between 215-240 psi. The mold is held for 5 seconds and then pressure is released to lower bottom platen. The mold is then transferred into the interior of a pneumatic hot press. The mold is held in the pneumatic hot press at 33.8 psi for 10 minutes. The engineered wood is removed and allowed to condition overnight at ambient temperature and humidity. After overnight conditioning, the particleboard test pieces are tested for its properties including Modulus of Rupture (MOR) and Modulus of elasticity (MOE) via Instron and tested for Thickness Swell Analysis

### Working Example 2: Determination of Modulus of Rupture (MOR)

The modulus of rupture as described herein is determined according to the following laboratory-scale procedure. A commercial-scale procedure may differ. The procedure uses a custom fixture equipped with rods with 127.3 mm support span to support a test piece of the engineered wood on the ends and includes an anvil (50mm height X 100mm width) to apply even pressure to the center of the engineered wood. Data is collected and analyzed using an Instron Model #5943 running Blue Hill Software version 3.15.1343 on Windows 7 PC with 1kN load cell.

Data is obtained by placing the engineered wood in the custom fixture and aligning the anvil 2-3 mm above the engineered wood. The anvil is lowered at 25 mm/min to push down into the center of the engineered wood. When the engineered wood reaches a point that it can no longer take the pressure, it ruptures and the force at this point is recorded to determine the modulus of rupture.

### Working Example 3: Thickness Swell% Measurement

The thickness swell% measurement is carried out according to the following laboratory-scale procedure. A commercial-scale procedure may differ. The procedure occurs by determining the initial thickness of the engineered wood using calipers. This can be done by taking the measurement at three locations and computing an average initial thickness. The engineered wood is placed in a 4L glass beaker and 2.1 to 2.2L of cold tap water is added to completely submerge the engineered wood. The submerged engineered wood is held for 120 minutes. The engineered wood is then removed, excess water is allowed to drip, and the engineered wood is left to equilibrate for 1 to 2 minutes. The thickness swell% of the engineered wood is then measured at three locations and an average thickness swell% is calculated. The initial thickness is subtracted from the thickness swell% and the resulting difference is divided by the initial thickness with the quotient multiplied by 100 to obtain the thickness swell%.

### Working Example 4: Testing Engineered Woods

### The Effect of Fructose Levels on engineered wood performance

The binders containing different fructose contents, Prolia 325/90 and 3% NaOH are tested on engineered wood using a urea formaldehyde (UF) as a control binder as shown in Tables 1, 2, 3, 5-18, 20, and 23-26. As described herein, the engineered wood can take the form of a particle board (PB). The binder dose (dry binder to dry wood fiber) is 13:100. Here and elsewhere, the content of the binder ingredients in this patent are all dry matter basis unless specifically mentioned otherwise. UF powder resin is added to dry wood fiber at 10: 100. The moisture content of the mixed wood fiber and the binder reaction mixture in these examples is 12.5% unless specifically mentioned otherwise.

In the absence of fructose (NF-FR), the thickness swell% of engineered wood is higher than that of engineered woods with fructose. The dry strength (e.g., modulus of rupture (MOR), maximum load, or modulus of elasticity (MOE) of engineered wood also increases with fructose content and peaks at 40%, which is higher than UF benchmark engineered wood. But when the fructose level in the binders reaches at 90%, the water resistance and dry strength of the resultant engineered wood greatly decreases.

**Table 1. The Effect of Fructose on Engineered Wood Performance**

| **Wt% in the binder reaction mixture of fructose (NF-FR) as the carbohydrate-containing component provided in the aqueous form** | **Parts binder Reaction Mixture/100 part dry WF** | **Wt % Prolia 325/90 as the polypeptide-containing component in the binder reaction mixture** | **Wt% in the binder reaction mixture of NaOH as the base provided in aqueous form** | **MOR N/mm²** | **Thickness Swell%** |
|---|---|---|---|---|---|
| **UF (i.e., no NF-FR)** | 10 | | | 2.67 | 24.3% |
| **NF-FR 0%** | 13 | 97% | 3% | 2.66 | 52.8% |
| **NF-FR 1%** | 13 | 96% | 3% | 2.55 | 50% |
| **NF-FR 3%** | 13 | 94% | 3% | 2.79 | 47% |
| **NF-FR 5%** | 13 | 92% | 3% | 2.85 | 39.5% |
| **NF-FR 10%** | 13 | 87% | 3% | 2.80 | 42% |
| **NF-FR 16%** | 13 | 81% | 3% | 2.66 | 41% |
| **NF-FR 20%** | 13 | 77% | 3% | 2.95 | 39% |
| **NF-FR 30%** | 13 | 67% | 3% | 3.09 | 32% |
| **NF-FR 35%** | 13 | 62% | 3% | 3.02 | 29% |
| **NF-FR 40%** | 13 | 57% | 3% | 3.13 | 29.5% |
| **NF-FR 45%** | 13 | 52% | 3% | 3.06 | 30% |
| **NF-FR 50%** | 13 | 47% | 3% | 2.80 | 34.2% |
| **NF-FR 52.5%** | 13 | 44.5% | 3% | 2.84 | 29% |
| **NF-FR 55%** | 13 | 42% | 3% | 2.80 | 37% |
| **NF-FR 60%** | 13 | 37% | 3% | 2.70 | 34% |
| **NF-FR 70%** | 13 | 27% | 3% | 2.50 | 30% |
| **NF-FR 80%** | 13 | 17% | 3% | 2.41 | 40% |
| **NF-FR 90%** | 13 | 7% | 3% | 1.31 | 57% |
| **NF-FR 97%** | 13 | 0% | 3% | 0.07 | Collapsed |

### Different Carbohydrates Formulated with Soy Flour

### The Comparison of Monosaccharides as Engineered Wood binders

Fructose (NF-FR), glucose, high fructose (HF) syrup IsoClear 42% (43% fructose and 52% glucose) and high fructose (HF) syrup IsoClear 55% (56% fructose and 40% glucose) are formulated with the soy protein Prolia 325/90. The results in Table 2 show that the engineered wood properties cured with the monosaccharides are similar. These simple sugars are good carbohydrate candidates for formulating an engineered wood binder with soy flour.

**Table 2. The Comparison of Different Monosaccharides in Engineered Wood Binder**

| | **UF** | **Wt% in the binder reaction mixture of fructose (NF-FR) as the carbohydrate-containing component provided in the aqueous form** | **Wt% in the binder reaction mixture of glucose as the carbohydrate-containing component provided in the aqueous form** | **Wt% in the binder reaction mixture of IsoClear 42% as the carbohydrate-containing component provided in the aqueous form** | Wt% in the **binder reaction mixture of IsoClear 55% as the carbohydrate-containing component provided in the aqueous form** |
|---|---|---|---|---|---|
| **Parts Binder Reaction mixture/100 part dry weight WF** | 10.0 | 13.1 | 13.1 | 13.1 | 13.1 |
| **Wt% Prolia 325/90 as the polypeptide-containing component in binder reaction mixture** | n.a. | 43.9% | 43.9% | 43.9% | 43.8% |
| **Wt% in the binder reaction mixture of monosaccharide as the carbohydrate-containing component provided in** the **aqueous form** | n.a. | 52.9% | 52.8% | 52.8% | 52.9% |
| **Wt% in the binder reaction mixture of NaOH as the base provided in aqueous form** | n.a. | 3.2% | 3.3% | 3.2% | 3.3% |
| **MOR, N/mm²** | 2.59 | 2.86 | 2.81 | 2.94 | 2.61 |
| **MOE, N/mm²** | 251 | 338 | 361 | 363 | 340 |
| **Thickness Swell%** | 26% | 38% | 40% | 40% | 38% |

The binders of Prolia 200/90 and high fructose syrup are also examined on engineered wood. In comparison with Prolia 325/90 and fructose (NF-FR) binder, the performance of resulting binders is similar and is comparable to that of UF, as shown in Table 3. It demonstrates that Cargill IsoClear high fructose syrup (e.g., IsoClear 42% and IsoClear 55%) and Prolia soy flour 200/90 can be used as engineered wood binder ingredients to replace more expensive ingredients such as fructose and Prolia 325/90.

**Table 3. The Engineered Woods of the High Fructose Syrup and Prolia Soy Flour**

| | **UF** | **Binder Reaction Mixture Including Mixture of Prolia 325/90 as Polypeptide-Containing Component and NF-FR as the carbohydrate-containing component provided in the aqueous form** | **Binder Reaction Mixture Including Mixture of Prolia 200/90 as Polypeptide-Containing Component and IsoClear 42% as the carbohydrate-containing component provided in the aqueous form** | **Binder Reaction Mixture Including Mixture of Prolia 200/90 as Polypeptide-Containing Component and IsoClear 55% as the carbohydrate-containing component provided in the aqueous form** |
|---|---|---|---|---|
| **Parts Binder Reaction mixture/100 part dry weight WF** | 10.0 | 13.0 | 13.0 | 13.1 |
| **Wt% Soy Flour (Prolia 325/90 or Prolia 200/90) as Polypeptide-Containing Component Binder Reaction Mixture** | n.a. | 56.9% | 56.9% | 56.8% |
| **Wt% in Binder Reaction Mixture Carbohydrate-Containing Component in Aqueous Form** | n.a. | 39.9% | 39.9% | 40.0% |
| **Wt% in the binder reaction mixture of NaOH as the base provided in aqueous form** | n.a. | 3.2% | 3.2% | 3.2% |
| **MOR, N/mm²** | 2.92 | 3.10 | 2.89 | 3.09 |
| **MOE, N/mm²** | 276 | 382 | 371 | 383 |
| **Thickness Swell%** | 23% | 30% | 29% | 30% |

### Disaccharides/Soyflour Engineered Wood binders

Two disaccharides, sucrose and lactose are formulated with soy flour (Prolia 200/90) and NaOH as shown in Table 4. Compared with the monosaccharides, the dry strength of the sucrose engineered wood is similar to that of the fructose and IsoClear 42% engineered woods while the thickness swell of the disaccharide engineered woods is higher than that of the monosaccharide engineered woods.

**Table 4. The Disaccharides Applied in Engineered Wood Binder**

| | **Binder Reaction Mixture Including NF-FR as Carbohydrate-Containing Component in Aqueous Form** | **Binder Reaction Mixture Including IsoClear 42% as Carbohydrate-Containing Component in Aqueous Form** | **Binder Reaction Mixture Including Sucrose as Carbohydrate-Containing Component in Aqueous Form** | **Binder Reaction Mixture Including Lactose as Carbohydrate-Containing Component in Aqueous Form** |
|---|---|---|---|---|
| **Parts Binder Reaction mixture/100 part dry weight WF** | 13.1 | 13.1 | 13.0 | 13.1 |
| **Wt% Prolia 200/90 as Polypeptide-Containing Component in Binder Reaction Mixture** | 56.9% | 56.8% | 56.9% | 56.9% |
| **Wt% in Binder Reaction Mixture of Carbohydrate-Containing Component in Aqueous Form** | 40.1% | 40.0% | 40.0% | 40.0% |
| **Wt% in the binder reaction mixture of NaOH as the base provided in aqueous form** | 3.0% | 3.2% | 3.1% | 3.1% |
| **MOR, N/mm²** | 2.45 | 2.58 | 2.43 | 2.25 |
| **MOE, N/mm²** | 349 | 321 | 338 | 336 |
| **Thickness Swell%** | 33% | 34% | 47% | 51% |

### Corn Syrup (CS)/Soy flour Engineered Wood binders

Maltose, corn syrup (e.g., Corn Syrup 63DE and Corn Syrup 43DE) and maltodextrin have different dextrose equivalent (DE) values. The carbohydrates with a higher DE bears more reducing groups. The results given in Table 5 indicate that the carbohydrates with more reducing groups yield stronger engineered woods.

**Table 5. The Carbohydrates with Different DE Applied in Engineered Wood Binder**

| | **UF** | **NF-FR in Binder Reaction Mixture as Carbohydrate-Containing Component in Aqueous Form** | **Corn Syrup 63DE in Binder Reaction Mixture as Carbohydrate-Containing Component in Aqueous Form** | **Maltose in Binder Reaction Mixture as Carbohydrate-Containing Component in Aqueous Form** | **Corn Syrup 43DE in Binder Reaction Mixture as Carbohydrate-Containing Component in Aqueous Form** | **Maltodextrin 1910 in Binder Reaction Mixture as Carbohydrate-Containing Component in Aqueous Form** |
|---|---|---|---|---|---|---|
| **Parts Binder Reaction mixture/100 part dry weight WF** | 10.0 | 13.1 | 13.0 | 13.1 | 13.1 | 13.1 |
| **Wt% Prolia 325/90 in Binder Reaction Mixture** | n.a. | 47.2% | 47.1% | 43.7% | 47.0% | 47.0% |
| **Wt% in Binder Reaction Mixture Carbohydrate-Containing Component in Aqueous form** | n.a. | 49.8% | 49.9% | 53.0% | 49.9% | 50.0% |
| **Wt% in the binder reaction mixture of NaOH as the base provided in aqueous form** | n.a. | 3.0% | 3.0% | 3.2% | 3.0% | 3.0% |
| **MOR, N/mm²** | 2.68 | 2.91 | 2.60 | 2.68 | 2.34 | 2.04 |
| **MOE, N/mm²** | 240 | 344 | 365 | 345 | 321 | 279 |
| **Thickness Swell%** | 26% | 37% | 45% | 54% | 56% | 61% |

### The Selection of Proteins for Engineered Wood Binder

### The Comparison of Soy Flours

As shown in Table 6, Soy Flours such as Prolia 200/90 and Prolia 325/90 are formulated with fructose (NF-FR) and NaOH to prepare engineered wood binders. The polydispersity index (PDI) of Prolia 200/90 and Prolia 325/90 is the same but the particle size of the former is larger than that of the latter. The engineered wood performance of the soy flour/fructose-based binders is comparable to the control UF engineered wood. The performances of the Prolia 200/90 engineered wood and Prolia 325/90 engineered wood are similar.

**Table 6. Prolia 325/90 and 200/90 in Engineered Wood Binder**

| | **UF** | **Prolia 200/90 as Polypeptide-Containing Component of Binder Reaction Mixture** | **Prolia 325/90 as Polypeptide-Containing Component of Binder Reaction Mixture** |
|---|---|---|---|
| **Parts Binder Reaction mixture/100 part dry weight WF** | 10.0 | 13.1 | 13.1 |
| **Wt% Polypeptide-Containing Component in Binder Mixture** | n.a. | 46.8% | 46.8% |
| **Wt% in Binder Reaction Mixture of NF-FR as Carbohydrate-Containing Component provided in Aqueous Form** | n.a. | 49.9% | 49.9% |
| **Wt% in the binder reaction mixture of NaOH as the base provided in aqueous form** | n.a. | 3.3% | 3.2% |
| **MOR, N/mm²** | 2.80 | 2.81 | 2.80 |
| **MOE, N/mm²** | 246 | 313 | 310 |
| **Thickness Swell%** | 23% | 33% | 35% |

The binder with Prolia 325/90 is also compared to that with Prolia 200/70, a soy flour with lower PDI. The results presented in Table 7 show that the engineered wood of Prolia 325/90 has greater dry strength and water resistance than that of Prolia 200/70. The comparison study of Prolia 200/20 and Prolia 200/90 is conducted and the results are displayed in Table 8. The engineered wood dry strength of Prolia 200/20 is much weaker. Combining the results in Table 6 above, it indicates that the soy protein with higher PDI form stronger bonding with fructose (NF-FR).

**Table 7. Prolia 200/70 and 325/90 in Engineered Wood Binder**

| | **UF** | **Prolia 325/90 as Polypeptide-Containing Component of Binder Reaction Mixture** | **Prolia 200/70 as Polypeptide-Containing Component of Binder Reaction Mixture** |
|---|---|---|---|
| **Parts Binder Reaction mixture/100 part dry weight WF** | 10.0 | 13.0 | 13 |
| **Wt% Polypeptide-Containing Component in Binder Mixture** | n.a. | 46.5% | 47% |
| **Wt% in Binder Reaction Mixture of NF-FR as Carbohydrate-Containing Component provided in Aqueous Form** | n.a. | 50.3% | 50% |
| **Wt% in the Binder Reaction Mixture of NaOH as the Base Provided in Aqueous Form** | n.a. | 3.2% | 3.2% |
| **MOR, N/mm²** | 3.20 | 3.25 | 2.48 |
| **MOE, N/mm²** | 276 | 391 | 323 |
| **Thickness Swell%** | 24% | 29% | 41% |

**Table 8. Prolia 200/20 and 200/90 in Engineered Wood Binder**

| | **UF** | **Prolia 200/90 as Polypeptide-Containing Component of Binder Reaction Mixture** | **Prolia 200/20 as Polypeptide-Containing Component of Binder Reaction Mixture** |
|---|---|---|---|
| **Parts Binder Reaction mixture/100 part dry weight WF** | 10.0 | 13.1 | 13.0 |
| **Wt% Polypeptide-Containing Component in Binder Mixture** | n.a. | 55.2% | 55.2% |
| **Wt% in Binder Reaction Mixture of NF-FR as Carbohydrate-Containing Component provided in Aqueous Form** | n.a. | 38.8% | 38.8% |
| **Wt% in the Binder Reaction Mixture of NaOH as the Base Provided in Aqueous Form** | n.a. | 6.0% | 6.0% |
| **MOR, N/mm²** | 2.64 | 2.67 | 1.74 |
| **MOE, N/mm²** | 243 | 306 | 223 |
| **Thickness Swell%** | 21% | 35% | 47% |

### The Comparison of Crop Proteins

Two pea flours containing 55% (Pea Protein 55%) and 78% (PurisPea 870) protein are formulated with fructose (NF-FR) and NaOH, respectively. According to the results listed in Table 9, both pea proteins produce poor engineered woods in terms of dry strength and water resistance whereas the engineered wood cured by the soy protein show higher MOR and lower thickness swell.

**Table 9. Pea Proteins in Engineered Wood Binder**

| | **UF** | **Prolia 325/90 as Polypeptide-Containing Component of Binder Reaction Mixture** | **Pea Protein 55% as Polypeptide-Containing Component of Binder** | **PurisPea 870 as Polypeptide-Containing Component of Binder** |
|---|---|---|---|---|
| **Parts Binder Reaction mixture/100 part dry weight WF** | 10.0 | 13.1 | 13.1 | 13.1 |
| **Wt% Polypeptide-Containing Component in Binder Mixture** | n.a. | 44.8% | 44.6% | 44.6% |
| **Wt% in Binder Reaction Mixture of NF-FR as Carbohydrate-Containing Component provided in Aqueous Form** | n.a. | 51.9% | 52.2% | 52.2% |
| **Wt% in the Binder Reaction Mixture of NaOH as the Base Provided in Aqueous Form** | n.a. | 3.3% | 3.2% | 3.2% |
| **MOR, N/mm²** | 2.66 | 2.78 | 2.25 | 1.70 |
| **MOE, N/mm²** | 254 | 343 | 298 | 254 |
| **Thickness Swell%** | 25% | 30% | 42% | 51% |

Crop proteins such as Wheat Flour, Zein (protein content 90%), Cargill's Empyreal corn protein concentrates (protein content 75%) and Corn Meal are used in engineered wood binder formulations. As shown in Table 10, compared to the Prolia 325/90 soy protein engineered wood, the engineered wood produced with the corn proteins and the Wheat Flour have weaker dry strength and higher thickness swell.

**Table 10. The Crop Protein in engineered wood Binder**

| | **UF** | **Prolia 325/90 as Polypeptide -Containing Component of Binder Reaction Mixture** | **Wheat Flour as Polypeptide -Containing Component of Binder Reaction Mixture** | **Zein as Polypeptide -Containing Component of Binder Reaction Mixture** | **Empyreal as Polypeptide-Containing Component of Binder Reaction Mixture** | **Corn Meal as Polypeptide-Containing Component of Binder Reaction Mixture** |
|---|---|---|---|---|---|---|
| **Parts Binder Reaction mixture/100 part dry weight WF** | 10.0 | 13.1 | 13.1 | 13.0 | 13.0 | 13.1 |
| **Wt % Polypeptide-Containing Component in Binder** | n.a. | 44.7% | 44.9% | 44.8% | 44.8% | 44.7% |
| **Wt% in Binder Reaction Mixture of NF-FR as Carbohydrate -Containing Component provided in Aqueous Form** | n.a. | 52.1% | 51.8% | 52.0% | 51.9% | 52.0% |
| **Wt% in the Binder Reaction Mixture of NaOH as the Base Provided in Aqueous Form** | n.a. | 3.3% | 3.3% | 3.2% | 3.2% | 3.3% |
| **MOR, N/mm²** | 2.41 | 2.62 | 1.14 | 2.22 | 0.41 | 0.43 |
| **MOE, N/mm²** | 230 | 324 | 142 | 212 | 68 | 61 |
| **Thickness Swell%** | 26% | 38% | 81% | 53% | 107% | 109% |

Cargill wheat gluten Gluvital and water-soluble wheat gluten C*HyProw are examined in engineered wood binder application. The binder composition and the resulting engineered wood properties were displayed Table 11. The binder of Gluvital and NF-FR yield an engineered wood with good dry strength. Even though the thickness swell of Gluvital engineered wood is slightly higher than Prolia 200/90 engineered wood, Gluvital still has potential to be used as a protein ingredient of the binder.

**Table 11. The Wheat Gluten Engineered Wood Binder**

| | **UF** | **Prolia 200/90 as Polypeptide-Containing Component of Binder Reaction Mixture** | **Gluvital as Polypeptide-Containing Component of Binder Reaction Mixture** | **C*HyProw as Polypeptide-Containing Component of Binder Reaction Mixture** | **C*HyProw as Polypeptide-Containing Component of Binder Reaction Mixture** |
|---|---|---|---|---|---|
| **Parts Binder Reaction mixture/100 part dry weight WF** | 10.0 | 13.1 | 13.0 | 13.1 | 13.1 |
| **Wt% Polypeptide-Containing component in Binder Reaction Mixture** | n.a. | 55.1% | 55.0% | 55.0% | 44.8% |
| **Wt% in Binder Reaction Mixture of NF-FR as Carbohydrate-Containing Component provided in Aqueous Form** | n.a. | 38.9% | 39.0% | 38.8% | 49.1% |
| **Wt% in the Binder Reaction Mixture of NaOH as the Base Provided in Aqueous Form** | n.a. | 6.0% | 6.0% | 6.2% | 6.1% |
| **MOR N/mm²** | 2.46 | 2.73 | 2.38 | 2.59 | 2.23 |
| **MOE, N/mm²** | 198 | 281 | 248 | 294 | 257 |
| **Thickness Swell%** | 19% | 30% | 38% | 101% | 99% |

### The Comparison of Animal Proteins

Animal proteins such as Whey Protein Isolate, casein and albumin listed in Table 12 are formulated with high fructose syrup (IsoClear 42%) and NaOH. UF resin and the Prolia 200/90 and fructose (NF-FR) binder are used as controls. Among the animal protein engineered woods, only the casein sodium salt engineered wood shows good dry strength, but the thickness swell% of the casein salt panel is much higher than that of Prolia 200/90.

**Table 12. The Comparison of Animal Protein as Engineered Wood Binder**

| | **UF** | **Prolia 200/90 as Polypeptide-Containing Component of Binder Reaction Mixture** | **Whey Protein Isolate as Polypeptide-Containing Component of Binder Reaction Mixture** | **Defatted Milk Powder as Polypeptide-Containing Component of Binder Reaction Mixture** | **Casein Sodium Salt as Polypeptide-Containing Component of Binder Reaction Mixture** | **Casein as Polypeptide-Containing Component of Binder Reaction Mixture** | **Albumin as Polypeptide-Containing Component of Binder Reaction Mixture** |
|---|---|---|---|---|---|---|---|
| **Parts Binder Reaction mixture/100 part dry weight WF** | 10.0 | 13.0 | 13.1 | 13.0 | 13.0 | 13.0 | 13.1 |
| **Wt% Polypeptide-Containing Component in Binder Mixture** | n.a. | 55.7% | 56.0% | 55.7% | 55.7% | 55.7% | 55.7% |
| **Wt% in Binder Reaction Mixture of IsoClear 42% as Carbohydrate-Containing Component provided in Aqueous Form** | n.a. | 39.2% | 38.9% | 39.2% | 39.3% | 39.3% | 39.2% |
| **Wt% in the Binder Reaction Mixture of NaOH as the Base Provided in Aqueous Form** | n.a. | 5.1% | 5.0% | 5.1% | 5.0% | 5.0% | 5.2% |
| **MOR, N/mm²** | 2.92 | 2.67 | 1.41 | 0.82 | 2.68 | 0.88 | 1.91 |
| **MOE, N/mm²** | 237 | 270 | 160 | 101 | 228 | 108 | 191 |
| **Thickness Swell%** | 25% | 37% | 63% | Broken | 52% | 70% | 31% |

### Base Effect on Engineered Wood Binder Performance

### The Effect of NaOH on Binder

The effect of NaOH on engineered wood performance is investigated in the experiments presented in Table 13, 14 and 15. In the absence of NaOH, the dry strength and the water resistance of the engineered wood are lower than the engineered woods with NaOH. It is apparent that NaOH plays a positive role in the binder of protein and fructose. Adding NaOH to the binder greatly increases engineered wood's water resistance. When NaOH level in the binder reaches to 33%, the mechanical properties and water resistance significantly decreases.

**Table 13. The Effect of NaOH on Engineered Wood Performance -I**

| | **UF** | **Mixture 1** | **Mixture 2** | **Mixture 3** |
|---|---|---|---|---|
| **Parts Binder Reaction mixture/100 part dry weight WF** | 10.0 | 13.0 | 13.1 | 13.0 |
| **Wt% Prolia 200/90 as Polypeptide-Containing Component of Binder Reaction Mixture** | n.a. | 58.8% | 56.9% | 51.8% |
| **Wt% in Binder Reaction Mixture of IsoClear 42% as Carbohydrate-Containing Component provided in Aqueous Form** | n.a. | 41.2% | 39.9% | 36.2% |
| **Wt% in the Binder Reaction Mixture of NaOH as the Base Provided in Aqueous Form** | n.a. | 0.0% | 3.2% | 12.0% |
| **pH of Aqueous Portion of Binder Reaction Mixture** | | | 11.85 | |
| **MOR, N/mm²** | 2.80 | 2.51 | 2.83 | 3.01 |
| **MOE, N/mm²** | 273 | 324 | 363 | 373 |
| **Thickness Swell%** | 25% | 51% | 41.8% | 41% |

**Table 14. The effect of NaOH on Engineered Wood performance-II**

| | **UF** | **Mixture 4** | **Mixture 5** | **Mixture 6** |
|---|---|---|---|---|
| **Parts Binder Reaction mixture/100 part dry weight WF** | 10.0 | 13.1 | 13.0 | 13.0 |
| **Wt% Prolia 200/90 as Polypeptide-Containing Component of Binder Reaction Mixture** | n.a. | 51.7% | 49.8% | 46.5% |
| **Wt% in Binder Reaction Mixture of IsoClear 42% as Carbohydrate-Containing Component provided in Aqueous Form** | n.a. | 36.3% | 35.2% | 32.7% |
| **Wt% in the Binder Reaction Mixture of NaOH as the Base Provided in Aqueous Form** | n.a. | 12.0% | 15.0% | 20.8% |
| **pH of Aqueous Portion of Binder Reaction Mixture** | | | 13.16 | 13.62 |
| **MOR, N/mm²** | 2.78 | 2.74 | 2.82 | 2.77 |
| **MOE, N/mm²** | 236 | 259 | 264 | 273 |
| **Thickness Swell%** | 23% | 29% | 30% | 31% |

**Table 15. The effect of NaOH on Engineered Wood performance-III**

| | **UF** | **Mixture 7** | **Mixture 8** | **Mixture 9** |
|---|---|---|---|---|
| **Parts Binder Reaction mixture/100 part dry weight WF** | 10.0 | 13.0 | 13.0 | 13.1 |
| **Wt% Prolia 200/90 as Polypeptide-Containing Component of Binder Reaction Mixture** | n.a. | 46.3% | 42.8% | 39.4% |
| **Wt% in Binder Reaction Mixture of IsoClear 42% as Carbohydrate-Containing Component provided in Aqueous Form** | n.a. | 32.7% | 30.2% | 27.7% |
| **Wt% in the Binder Reaction Mixture of NaOH as the Base Provided in Aqueous Form** | n.a. | 20.9% | 27.0% | 32.9% |
| **pH of Aqueous Portion of Binder Reaction Mixture** | | 13.62 | | |
| **MOR, N/mm²** | 2.47 | 2.26 | 2.33 | 2.02 |
| **MOE, N/mm²** | 239 | 260 | 255 | 207 |
| **Thickness Swell%** | 20% | 38% | 39% | 57% |

### The Effect of MgO on the Binder

MgO (MAGOX 98LR) is applied as an alkaline agent of the engineered wood binder. The different amount of MgO is added to the binder formulation. The ratios of soy protein (Prolia 200/90) to MgO are 3:1, 6:1, 10:1 and 20:1 (Mixtures 10-13), respectively. A comparative binder in the absence of MgO (Mixture 14) is also prepared. According to the results presented in Table 16, the binder containing MgO produced stronger engineered woods than the one without MgO. The MOR of the engineered woods with MgO are comparable to the UF control.

**Table 16. The effect of MgO on Engineered Wood performance**

| | **UF** | **Mixture 10** | **Mixture 11** | **Mixture 12** | **Mixture 13** | **Mixture 14** |
|---|---|---|---|---|---|---|
| **Parts Binder Reaction mixture/100 part dry weight WF** | 10.0 | 15.8 | 14.4 | 13.9 | 13.4 | 13.0 |
| **Wt% Prolia 200/90 as Polypeptide-Containing Component of Binder Reaction Mixture** | n.a. | 52.7% | 57.7% | 59.9% | 61.7% | 63.9% |
| **Wt% in Binder Reaction Mixture of NF-FR as Carbohydrate-Containing Component provided in Aqueous Form** | n.a. | 29.8% | 32.7% | 34.0% | 35.2% | 36.1% |
| **Wt% in the Binder Reaction Mixture of NaOH as the Base Provided in Aqueous Form** | n.a. | 0.0% | 0.0% | 0.0% | 0.0% | 0.0% |
| **Wt% in the Binder Reaction Mixture MAGOX 98LR (MgO) in Aqueous Form** | n.a. | 17.5% | 9.6% | 6.1% | 3.1% | 0.0% |
| **Ratio of Prolia 200/90 to MgO in binder reaction mixture** | n.a. | 3.00 | 6.00 | 9.9 | 19.6 | n.a. |
| **MOR, N/mm²** | 2.63 | 2.52 | 2.65 | 3.07 | 2.88 | 2.40 |
| **MOE, N/mm²** | 228 | 281 | 309 | 324 | 315 | 263 |
| **Thickness Swell%** | 26% | 39% | 41% | 40% | 41% | 44% |

The performances of MAGOX 98LR (MgO) and NaOH as alkaline agents of engineered wood binder are compared. In the three binder (Mixtures 15-17) formulations listed in Table 17, 9% of NaOH, 9% of MgO and a mixture of 7% MgO/2% NaOH are added to the binder compositions, respectively. The resultant engineered woods show very similar performances in terms of MOR and water resistance.

**Table 17. The Comparison of MgO and NaOH in Engineered Wood Binder**

| | **UF** | **Mixture 15** | **Mixture 16** | **Mixture 17** |
|---|---|---|---|---|
| **Parts Binder Reaction mixture/100 part dry weight WF** | 10.0 | 13.0 | 13.1 | 13.0 |
| **Wt% Prolia 200/90 as Polypeptide-Containing Component of Binder Reaction Mixture** | n.a | 53.5% | 53.4% | 53.3% |
| **Wt% in Binder Reaction Mixture of NF-FR as Carbohydrate-Containing Component provided in Aqueous Form** | n.a. | 37.6% | 37.6% | 37.6% |
| **Wt% in the Binder Reaction Mixture of NaOH as the Base Provided in Aqueous Form** | n.a. | 8.9% | 0.0% | 2.0% |
| **Wt% in the Binder Reaction Mixture of MAGOX 98LR as the Base Provided in Aqueous Form** | n.a. | 0.0% | 9.0% | 7.1% |
| **Ratio of Prolia 200/90 to MAGOX 98LR (MgO) in binder reaction mixture** | n.a. | n.a. | 6.0 | 7.6 |
| **MOR, N/mm²** | 2.55 | 2.70 | 2.58 | 2.74 |
| **MOE, N/mm²** | 259 | 344 | 342 | 332 |
| **Thickness Swell%** | 25% | 32% | 32% | 36% |

### The Effect of Na₂SO₃ on Engineered Wood Performance

Sodium sulfite (Na₂SO₃) is added to the binder formulation as an additive. In all formulations, the total amount of soy flour, fructose and NaOH is 10% of wood fiber. Na₂SO₃ is added to the formulation at 0.5%, 1,6%, 3.2% and 4.7 wt% of the dry binder (Mixtures 18-22), respectively. Na₂SO₃ is mixed with the fructose solution and then sprayed to the wood fiber. As shown in Table 18, the dry strength of Na₂SO₃ engineered wood is significantly increased when sodium sulfite dose reached 1.6 wt% of the dry binder and levels off at higher doses of sodium sulfite.

**Table 18. The Effect of Sodium Sulfite (SF) on engineered wood Performance**

| | **UF** | **Mixture 18** | **Mixture 19** | **Mixture 20** | **Mixture 21** | **Mixture 22** |
|---|---|---|---|---|---|---|
| **Parts Binder Reaction mixture/100 part dry weight WF** | 10.0 | 13.0 | 12.9 | 13.3 | 13.5 | 13.7 |
| **Wt% Prolia 200/90 as Polypeptide-Containing component in Binder Reaction Mixture** | n.a. | 55.2% | 55.7% | 54.3% | 53.5% | 52.6% |
| **Wt% in Binder Reaction Mixture of NF-FR as Carbohydrate-Containing Component provided in Aqueous Form** | n.a. | 38.8% | 37.9% | 38.1% | 37.5% | 36.9% |
| **Wt% in the Binder Reaction Mixture of NaOH as the Base Provided in Aqueous Form** | n.a. | 6.0% | 5.9% | 5.9% | 5.8% | 5.7% |
| **Wt% in the Binder Reaction Mixture Na₂SO₃ in Aqueous Form** | n.a. | 0.0% | 0.5% | 1.6% | 3.2% | 4.7% |
| **MOR, N/mm²** | 2.80 | 2.91 | 2.77 | 3.23 | 3.17 | 3.24 |
| **MOE, N/mm²** | 242 | 339 | 330 | 358 | 362 | 402 |
| **Thickness Swell%** | 21% | 34% | 34% | 31% | 32% | 35% |

### Effect of the Process Conditions on the Engineered Wood Properties

### The Addition Form of Soy Flour

Soy flour (e.g., Prolia 325/90) can be used in powder form or dispersion form. Two process procedures are designed to examine which form of soy flour performed better with fructose (NF-FR). In the first two runs (Soy flour powder 1 and Soy flour powder 2) listed in Table 19, after the solution of fructose and NaOH is mixed with wood fiber, the soy flour in powder form is added to the wood fiber mixture. In the third and fourth runs (Binder dispersion 3 and Binder dispersion 4), soy flour, fructose and sodium hydroxide solution are mixed together with water to form the dispersion solutions. The binder dispersion is then blended with wood fiber for 5 minutes. The resultant engineered woods of the dry soy flour powder show higher dry strength and lower thickness swell. Thus, the dry addition of soy flour is preferred in the making of engineered wood.

**Table 19. The Addition of Soy Flour Powder and Soy Flour Dispersion**

| | **Soy flour powder 1** | **Soy flour powder 2** | **Binder dispersion 3** | **Binder dispersion 4** |
|---|---|---|---|---|
| **Parts Binder Reaction mixture/100 part dry weight WF** | 10.0 | 10.1 | 10.0 | 10.0 |
| **Wt% Prolia 325/90 as Polypeptide-Containing Component in Binder Mixture** | 49.7% | 48.1% | 49.7% | 48.1% |
| **Wt% in Binder Reaction Mixture of NF-FR as Carbohydrate-Containing Component provided in Aqueous Form** | 47.2% | 45.9% | 47.3% | 45.8% |
| **Wt% in the Binder Reaction Mixture of NaOH as the Base Provided in Aqueous Form** | 3.1% | 6.0% | 3.0% | 6.0% |
| **MOR N/mm²** | 2.60 | 2.38 | 1.56 | 1.16 |
| **MOE, N/mm²** | 354 | 302 | 202 | 159 |
| **Thickness Swell%** | 41% | 37% | 48% | 51% |

### The addition order of NaOH and Fructose Solutions

The addition sequence of the solutions of fructose (NF-FR) and NaOH to wood fiber is an important factor affecting engineered wood properties. In the first formulation (Combined NF-FR and NaOH) presented in Table 20, the fructose and the sodium hydroxide are mixed with water and applied to the wood fiber all together prior to the addition of soy flour powder. In the second (NaOH added first/NF-FR) and the third (NF-FR added first/NaOH) formulations, the fructose solution and the NaOH solution are prepared separately and the amounts of both solutions are same. In the making of the second engineered wood, the NaOH solution is mixed with the wood fiber first and the fructose solution the second. The soy flour is added at last to the wood fiber mixture. In the making of the third engineered wood, the addition order of the NaOH solution and the fructose solution is reversed while other procedures remain same. The results in Table 20 show that the engineered wood produced from the combined binder yield greater dry strength and better water resistance.

**Table 20. The effect of the addition order of fructose and NaOH solution on Engineered Wood**

| | **UF** | **Combined NF-FR and NaOH** | **NaOH added first/NF-FR** | **NF-FR added first/NaOH** |
|---|---|---|---|---|
| **Parts Binder Reaction mixture/100 part dry weight WF** | 10.0 | 13.1 | 13.1 | 13.0 |
| **Wt% Prolia 200/90 as Polypeptide-Containing Component in Binder Reaction Mixture** | n.a. | 55.2% | 55.2% | 55.2% |
| **Wt% in Binder Reaction Mixture of NF-FR as Carbohydrate-Containing Component provided in Aqueous Form** | n.a. | 38.7% | 38.7% | 38.8% |
| **Wt% in the Binder Reaction Mixture of NaOH as the Base Provided in Aqueous Form** | n.a. | 6.0% | 6.0% | 6.0% |
| **MOR, N/mm²** | 2.62 | 2.75 | 2.66 | 2.52 |
| **MOE, N/mm²** | 228 | 291 | 266 | 278 |
| **Thickness Swell%** | 23% | 33% | 39% | 39% |

### The Effect of Dry Content of Aqueous Portion Of The Binder Reaction Mixture on Engineered Wood Performance

The moisture content (MC) of the mixture of wood fiber and binder are kept same at 12.5%. Two aqueous portions of the binder reaction mixture solutions with different levels of dry content (DC) levels (e.g., content of carbohydrate-containing component and base in aqueous portion of binder reaction mixture) are prepared as displayed in Table 21. In the first formulation (aqueous portion 32.5% DC), the aqueous portion of the binder reaction mixture with 32.5% DC (NF-FR and NaOH in aqueous portion) is sprayed to wood fiber prior to the addition of Prolia 200/90. In the second formulation (aqueous portion 45% DC), the aqueous portion of the binder reaction mixture with 45% DC (NF-FR and NaOH in aqueous portion) is first mixed with wood fiber. Then free water is sprayed to the mixture followed by adding Prolia 200/90. The first process procedure produces a much stronger engineered wood than the second one.

**Table 21. The Effect of Dry Content (DC) of aqueous portion of the binder reaction mixture on engineered wood Performance**

| | **Aqueous Portion 32.5% DC** | **Aqueous Portion 45% DC** |
|---|---|---|
| **Parts Binder Reaction mixture/100 part dry weight WF** | 13.0 | 13.0 |
| **Wt% Prolia 200/90 as Polypeptide-containing Component in Binder Mixture** | 55.1% | 55.0% |
| **Wt% in Binder Reaction Mixture of NF-FR as Carbohydrate-Containing Component provided in Aqueous Form** | 38.9% | 39.0% |
| **Wt% in the Binder Reaction Mixture of NaOH as the Base Provided in Aqueous Form** | 6.0% | 6.0% |
| **Wt% of dry content of the aqueous portion of the binder reaction mixture** | 32.5% | 44.9% |
| **Moisture Content of the mixture of the WF and Binder Reaction Mixture** | 12.5% | 12.5% |
| **MOR N/mm²** | 2.89 | 2.49 |
| **MOE, N/mm²** | 347 | 309 |
| **Thickness Swell%** | 36% | 37% |

### The addition order of aqueous portion of the binder reaction mixture and Protein Powder

The addition sequence of the aqueous portion of the binder reaction mixture and the soy flour (Prolia 200/90) is evaluated in this testing. In the first run, the binder solution of fructose and NaOH was first mixed with wood fiber for 1 minute. Then the soy flour powder is blended with the mixture for 2 minutes. For the second engineered wood, the addition order of the aqueous portion of the binder reaction mixture and soy flour is reversed. The soy flour powder is first blended with the wood fiber for 2 minutes followed by spraying the binder solution of fructose (NF-FR) and NaOH. Then the mixture is blended for 1 minute. The engineered wood performance obtained from the different addition orders of the binder components is presented in Table 22. The engineered wood produced with the first addition method exhibits better dry strength than the one made with the second procedure. It reveals that adding the aqueous portion of the binder reaction mixture prior to the soy powder can form stronger bonding among wood fiber.

**Table 22. The Effect of the Addition Order of the aqueous portion of the binder reaction mixture and Polypeptide-Containing Component Powder**

| | **Aqueous Portion of Binder Reaction Mixture Added First** | **Polypeptide-Containing Component Added First** |
|---|---|---|
| **Parts Binder Reaction mixture/100 part dry weight WF** | 13.0 | 13.0 |
| **Wt% Prolia 200/90 as Polypeptide-Containing Component in Binder Mixture** | 55.1% | 55.1% |
| **Wt% in Binder Reaction Mixture of NF-FR as Carbohydrate-Containing Component provided in Aqueous Form** | 38.9% | 38.9% |
| **Wt% in the Binder Reaction Mixture of NaOH as the Base Provided in Aqueous Form** | 6.0% | 6.0% |
| **MOR, N/mm²** | 2.75 | 2.24 |
| **MOE, N/mm²** | 262 | 230 |
| **Thickness Swell%** | 30% | 35% |

### The Mix Time of Aqueous Portion of the Binder Reaction Mixture and Wood Fiber

The effect of the mixing time of the aqueous portion of the binder reaction mixture with wood fiber on engineered wood properties is evaluated. Fructose (NF-FR) and sodium hydroxide are mixed with water prior to the addition to wood fiber. The aqueous portion of the binder reaction mixture and wood fiber are blended for 1, 3 and 5 minutes, respectively. The soy flour powder (Prolia 200/90) is then added to the mixture followed by 2 minutes mixing. As shown in Table 23, the MOR of the resultant engineered woods are increased with mixing time.

**Table 23. The Effect of the Mixing Time of the Binder Solution of Fructose and NaOH on Engineered Wood**

| | **UF 10%** | **1 Min. Mixing** | **3 Min. Mixing** | **5 Min. Mixing** |
|---|---|---|---|---|
| **Parts Binder Reaction mixture/100 part dry weight WF** | 10.0 | 13.1 | 13.1 | 13.0 |
| **Wt% Prolia 200/90 as Polypeptide-Containing Component of Binder Reaction** | n.a. | 55.2% | 55.2% | 55.2% |
| **Wt% in Binder Reaction Mixture of IsoClear 42% as Carbohydrate-Containing Component provided in Aqueous Form** | n.a. | 38.8% | 38.8% | 38.8% |
| **Wt% in the Binder Reaction Mixture of NaOH as the Base Provided in Aqueous Form** | n.a. | 6.0% | 6.0% | 6.0% |
| **MOR, N/mm²** | 2.48 | 2.93 | 3.03 | 3.44 |
| **MOE, N/mm²** | 195 | 320 | 335 | 392 |
| **Thickness Swell%** | 20% | 36% | 32% | 32% |

### Aged Aqueous Portion of the Binder Reaction Mixture Solutions

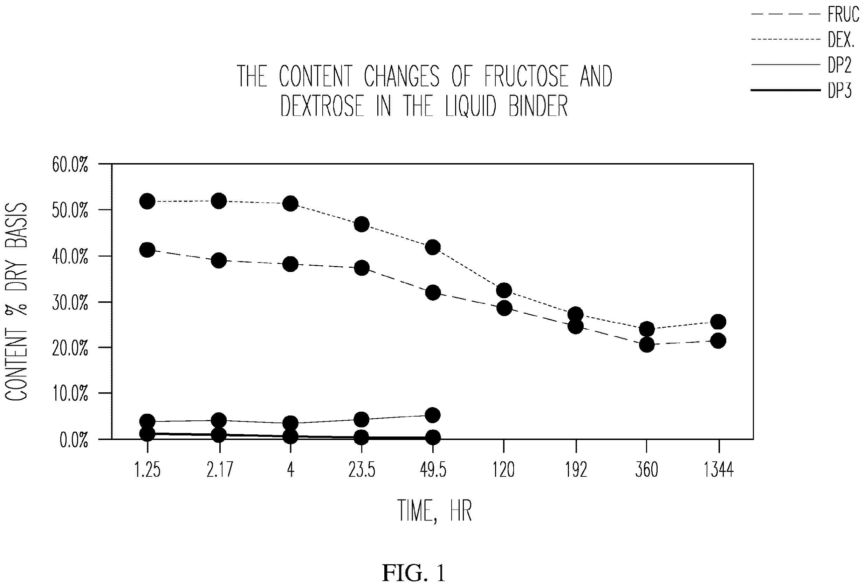

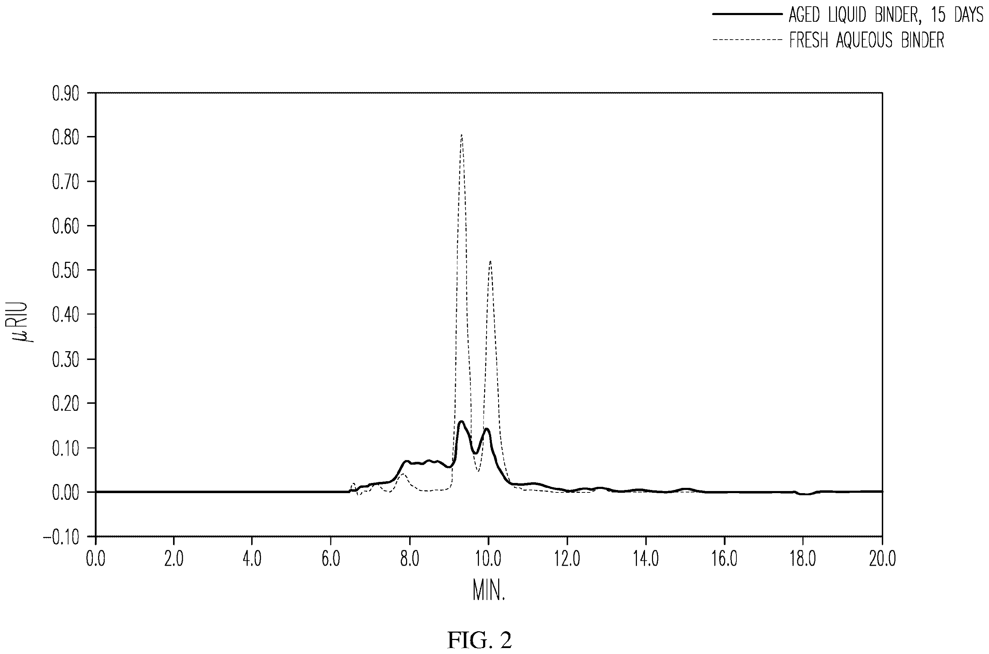

The aqueous portion of the binder reaction mixture of IsoClear 42% and NaOH solution is prepared and stored at room temperature. The aged aqueous portion of the binder reaction mixture is sampled to assess the performance on engineered wood. The results are given in Table 24. The dry strength and water resistance of the engineered woods produced by the aged aqueous portion of the binder reaction mixture and soy flour do not show significant changes. In fact, the dry strength of engineered wood with aged aqueous portion of the binder reaction mixture slightly increases. The high performance aqueous chromatography (HPLC) results indicate that fructose and glucose content decreases with time and the unidentified oligomers are generated as shown in FIGs. 1 and 2. The conditions that the HPLC was run at are as follows:

| | |
|---|---|
| Instrument: | Shimdzu LC-20A HPLC System |
| Temperature: | 60 °C |
| Eluent and solvent: | 0.01N H₂SO₄ |
| Flow rate: | 0.6 mL/minute |
| Columns: | Bio-Rad HPLC column: Aminex HPX-87H ion exclusion column 300mm x 7.8mm |

**Table 24. The Performance of Aged Binder Reaction Mixture**

| | **UF** | **Fresh Aqueous Portion of Binder Reaction Mixture** | **Aqueous Portion of Binder Reaction Mixture aged for 26 hrs** | **Aqueous Portion of Binder Reaction Mixture aged for 50 hrs** | **Aqueous Portion of Binder Reaction Mixture aged for 5 days** | **Aqueous Portion of Binder Reaction Mixture aged for 15 days** |
|---|---|---|---|---|---|---|
| **Parts Binder Reaction mixture/100 part dry weight WF** | 10.0 | 13.1 | 13.0 | 13.0 | 13.0 | 13.0 |
| **Wt% Prolia 200/90 as Polypeptide-Containing Component of Binder Reaction Mixture** | n.a. | 55.1% | 55.2% | 55.0% | 55.2% | 55.2% |
| **Wt% in Binder Reaction Mixture of IsoClear 42% as Carbohydrate-Containing Component provided in Aqueous Form** | n.a. | 38.8% | 38.8% | 39.0% | 38.8% | 38.8% |
| **Wt% in the Binder Reaction Mixture of NaOH as the Base Provided in Aqueous Form** | n.a. | 6.1% | 6.0% | 6.0% | 6.0% | 6.0% |
| **MOR N/mm²** | 2.32 | 2.68 | 2.53 | 2.77 | 2.73 | 2.99 |
| **MOE, N/mm²** | 199 | 275 | 258 | 271 | 295 | 333 |
| **Thickness Swell%** | 18% | 31% | 28.9% | 30.2% | 30% | 31% |

### The Effect of the Moisture Content of Wood Mattress

The mixture of the wood fiber and binder reaction mixture is called a "mattress." The mattress are prepared at two moisture levels, 10.5 wt% and 11.5 wt%. UF powder resin is used as the control (UF 10%). At each mattress MC, two binder doses 13% (Mattress 1) and 12% (Mattress 2) are applied to engineered wood productions as seen in Table 25 and 26. The binder is more responsive to mattress moisture content than UF resin. When the mattress moisture increases from 10.5 wt% (Mattress 3) to 11.5 wt% (Mattress 4), the dry strength and water resistance of the engineered woods of the binder significantly improves whereas UF engineered woods made at two mattress MC only showed slight changes in both dry strength and thickness swell.

**Table 25. Engineered Wood at 10.5% Mattress Moisture**

| | **UF** | **Mattress 1** | **Mattress 2** |
|---|---|---|---|
| **Parts Binder Reaction mixture/100 part dry weight WF** | 10.0 | 13.1 | 12.1 |
| **Wt% Prolia 200/90 as Polypeptide-Containing Component of Binder Reaction Mixture** | n.a. | 55.1% | 55.0% |
| **Wt% in Binder Reaction Mixture of IsoClear 42% as Carbohydrate-Containing Component provided in Aqueous Form** | n.a. | 38.7% | 39.0% |
| **Wt% in the Binder Reaction Mixture of NaOH as the Base Provided in Aqueous Form** | n.a. | 6.2% | 6.1% |
| **Moisture Content of the mixture of the WF and Binder Reaction Mixture** | 10.5% | 10.5% | 10.5% |
| **MOR N/mm2** | 1.97 | 1.36 | 1.55 |
| **MOE, N/mm²** | 159 | 151 | 156 |
| **Thickness Swell%** | 27% | 48% | 53% |

**Table 26. Engineered Wood at 11.5% Mattress Moisture**

| | **UF** | **Mattress 3** | **Mattress 4** |
|---|---|---|---|
| **Parts Binder Reaction mixture/100 part dry weight WF** | 10.0% | 13.1% | 12.1% |
| **Wt% Prolia 200/90 as Polypeptide-Containing Component in Binder Mixture** | n.a. | 54.9% | 54.7% |
| **Wt% in Binder Reaction Mixture of NF-FR as Carbohydrate-Containing Component provided in Aqueous Form** | n.a. | 39.1% | 38.7% |
| **Wt% in the Binder Reaction Mixture of NaOH as the Base Provided in Aqueous Form** | n.a. | 6.1% | 6.5% |
| **Moisture Content of the mixture of the WF and Binder Reaction Mixture** | 11.5% | 11.5% | 11.6% |
| **MOR N/mm²** | 1.85 | 2.03 | 1.92 |
| **MOE, N/mm²** | 157 | 216 | 189 |
| **Thickness Swell%** | 21.0% | 36.2% | 36.2% |

The terms and expressions that have been employed are used as terms of description and not of limitation, and there is no intention in the use of such terms and expressions of excluding any equivalents of the features shown and described or portions thereof, but it is recognized that various modifications are possible within the scope of the embodiments of the present disclosure. Thus, it should be understood that although the present disclosure has been specifically disclosed by specific embodiments and optional features, modification and variation of the concepts herein disclosed may be resorted to by those of ordinary skill in the art, and that such modifications and variations are considered to be within the scope of embodiments of the present disclosure.

### Additional Examples.

The following exemplary examples are provided, the numbering of which is not to be construed as designating levels of importance:
Example 1 provides an engineered wood precursor mixture comprising:
   a plurality of wood substrates;
   a binder reaction mixture present in a range of from 3 parts to 25 parts per 100 parts of the dry weight of the plurality of wood substrates, the binder composition comprising:
      an aqueous portion comprising:
         a carbohydrate-containing component in a range of from 2 wt% to 85 wt% based on a dry weight of the binder reaction mixture, the carbohydrate-containing component comprising glucose, fructose, sucrose, or a mixture thereof, and the combined wt% of glucose, fructose, sucrose, or mixture thereof in the carbohydrate-containing component is at least 60 wt%; and
            1 wt% to 33 wt% of a base based on a dry weight of the binder reaction mixture, wherein a pH of the aqueous portion is greater than 10, for example 10.5, 11, 11.5, 12, 12.5, 13, 13.5, or 14; and
      an at least partially non-dissolved polypeptide-containing component selected from soy flour, wheat gluten, or a combination thereof, in a range of from 20 wt% to 85 wt% based on the dry weight of the binder reaction mixture.
Example 2 provides the engineered wood precursor mixture of Example 1, wherein the carbohydrate-containing component is in a range of from 15 wt% to 65 wt% based on the dry weight of the binder reaction mixture.
Example 3 provides the engineered wood precursor mixture of any one of Examples 1 or 2, wherein the carbohydrate-containing component comprises a glucose syrup, high fructose corn syrup, a sucrose-containing composition, or a mixture thereof.
Example 4 provides the engineered wood precursor mixture of any one of Examples 1-3, wherein the carbohydrate-containing component comprises glucose, fructose or mixtures thereof and the total weight percent of glucose and fructose is in the range of 20 wt% to 60 wt% based on dry weight of the binder reaction mixture.
Example 5 provides the engineered wood precursor mixture of any one of Examples 1-4, wherein the carbohydrate-containing component comprises glucose, fructose or mixtures thereof.
Example 6 provides the engineered wood precursor mixture of any one of Examples 1-5, wherein the polypeptide-containing component comprises soy flour, wherein the soy flour has from 40 wt% to 65 wt% protein based on the total soy flour present.
Example 7 provides the engineered wood precursor mixture of any one of Examples 1-6, wherein the polypeptide-containing component comprises soy flour and comprises from 20 wt% to 85 wt% of the dry weight of the binder reaction mixture.
Example 8 provides the engineered wood precursor mixture of Example 7, wherein the soy flour comprises from 30 wt% to 80 wt% of the dry weight the binder reaction mixture.
Example 9 provides the engineered wood precursor mixture of any one of Examples 1-8, wherein the pH of the aqueous portion is in a range of from 10 to 14.
Example 10 provides the engineered wood precursor mixture of any one of Examples 1-9, wherein the pH of the aqueous portion is in a range of from 11 to 14.
Example 11 provides the engineered wood precursor mixture of any one of Examples 1-10, wherein the base comprises NaOH, magnesium oxide, or mixtures thereof.
Example 12 provides the engineered wood precursor mixture of any one of Examples 1-11, wherein the base comprises NaOH.
Example 13 provides the engineered wood precursor mixture of any one of Examples 1-12, wherein the carbohydrate-containing component comprises a glucose syrup having a dextrose equivalent (DE) of at least 60.
Example 14 provides the engineered wood precursor mixture of any one of Examples 1-12, wherein the carbohydrate-containing component comprises a glucose syrup having a dextrose equivalent (DE) of at least 80, for example, at least 85, at least 90, at least 95.
Example 15 provides the engineered wood precursor mixture of any one of Examples 1-14, wherein the carbohydrate-containing component comprises a high fructose corn syrup comprising at least 90 wt% fructose and glucose.
Example 16 provides the engineered wood precursor mixture of Example 15, wherein the high fructose corn syrup comprises at least 94 wt% fructose and glucose.
Example 17 provides the engineered wood precursor or mixture of any one of Examples 15-16, wherein the high fructose corn syrup comprises from 30 wt% to 70 wt% glucose.
Example 18 provides the engineered wood precursor mixture of any one of Examples 15-17, wherein the high fructose corn syrup comprises from 35 wt% to 65 wt% glucose.
Example 19 provides the engineered wood precursor mixture of any one of Examples 1-18, wherein the polypeptide-containing component further comprises a protein sourced from an animal protein, a casein salt, a plant protein, a soy flour, linseed flour, flaxseed flour, cottonseed flour, canola flour, sunflower flour, peanut flour, lupin flour, pea flour, and mixtures thereof.
Example 20 provides the engineered wood precursor mixture of any one of Examples 1-19, wherein the polypeptide-containing component comprises a soy flour.
Example 21 provides the engineered wood precursor mixture of Example 20, wherein the soy flour has a protein dispersibility index of at least 60.
Example 22 provides the engineered wood precursor mixture of any one of Examples 1-21 wherein the soy flour has a protein dispersibility index (PDI) in a range of from 70 to 95, for example a PDI from 80 to 90.
Example 23 provides the engineered wood precursor mixture of any one of Examples 1-22, wherein the polypeptide-containing component passes through a screen sized 100-mesh screen to a 635-mesh screen.
Example 24 provides the engineered wood precursor mixture of any one of Examples 1-23, wherein the polypeptide-containing component passes through a screen sized 100-mesh screen to a 400-mesh screen, for example a screen size of from 150 to 325.
Example 25 provides the engineered wood precursor mixture of any one of Examples 1-24, wherein the plurality of wood substrates comprise one or more strands, one or more particles, one or more fibers, or a mixture thereof.
Example 26 provides the engineered wood precursor mixture of Example 25, wherein the base is in a range of from 3 wt% to 21 wt% based on the dry weight of the binder reaction mixture.
Example 27 provides the engineered wood precursor mixture of any one of Examples 25 or 26, wherein the base is in a range of from 6 wt% to 15 wt% based on the dry weight of the binder reaction mixture.
Example 28 provides the engineered wood precursor mixture of any one of Examples 1-27, wherein the mixture comprises less than 5 wt% of urea-formaldehyde, or a mixture thereof.
Example 29 provides the engineered wood precursor mixture of any one of Examples 1-28, wherein the binder reaction mixture is substantially free of urea-formaldehyde, or a mixture thereof.
Example 30 provides the engineered wood precursor mixture of any one of Examples 1-29 further comprising sodium sulfite, sodium bisulfite, sodium metabisulfite, or a mixture thereof.
Example 31 provides the engineered wood precursor mixture of Example 30, wherein the sodium sulfite, sodium bisulfite, sodium metabisulfite, or a mixture thereof is present in a range of from 1 wt% to 10 wt%, based on the dry weight of the binder reaction mixture.
Example 32 provides the engineered wood precursor mixture of any one of Examples 30 or 31, wherein the binder reaction mixture present in a range of from 8 parts to 17 parts per 100 parts of the dry weight of the plurality of wood substrates.
Example 33 provides the engineered wood precursor mixture of any one of Examples 1-32, wherein a moisture content of the mixture applied to the plurality of wood substrates is in a range of from 7% to 25%.
Example 34 provides the engineered wood precursor mixture of any one of Examples 1-33, wherein a moisture content of the mixture applied to the plurality of wood substrates is in a range of from 9% to 13%.
Example 35 provides an engineered wood comprising a reaction product of the engineered wood precursor of any one of Examples 1-34.
Example 36 provides the engineered wood of Example 35, wherein the engineered wood comprises particle board, medium density fiber board, high density fiberboard, oriented strand board, engineered wood flooring, and combinations thereof.
Example 37 provides the engineered wood of any one of Examples 35 or 36, wherein the reaction product of the binder reaction mixture is in a range of from 3 parts to 25 parts per 100 parts of the dry weight of the plurality of wood substrates of the engineered wood.
Example 38 provides the engineered wood of any one of Examples 35-37, wherein the reaction product of the binder reaction mixture is in a range of from 8 parts to 17 parts per 100 parts of the dry weight of the plurality of wood substrates of the engineered wood.
Example 39 provides the engineered wood of any one of Examples 35-38, wherein a modulus of rupture of the engineered wood is in a range of from 0.5 N/mm² to 25 N/mm².
Example 40 provides the engineered wood of any one of Examples 35-39, wherein a modulus of rupture of the engineered wood is in a range of from 2 N/mm² to 22 N/mm².
Example 41 provides the engineered wood of any one of Examples 35-40, wherein a thickness swell% of the engineered wood measured after soaking the engineered wood in water for two hours is in a range of from 5% to 45%.
Example 42 provides the engineered wood of any one of Examples 35-41, wherein a thickness swell% of the engineered wood measured after soaking the engineered wood in water for two hours is in a range of from 20% to 40%.
Example 43 provides the engineered wood of any one of Examples 35-42, wherein a modulus of elasticity of the engineered wood is in a range of from 200 N/mm² to 3000 N/mm².
Example 44 provides the engineered wood of any one of Examples 35-43, wherein a modulus of elasticity of the engineered wood is in a range of from 500 N/mm² to 2750 N/mm².
Example 45 provides the engineered wood of any one of Examples 35-44, wherein the modulus of rupture, the thickness swell%, modulus of elasticity, or a combination thereof of the engineered wood is substantially similar to optionally a modulus of rupture, a thickness swell%, or a combination thereof of a corresponding engineered wood differing in that the reaction product comprises urea-formaldehyde, or a mixture thereof.
Example 46 provides the engineered wood of Example 45, wherein the modulus of rupture, the thickness swell%, modulus of elasticity, or a combination thereof of the engineered wood is within 1% to 10% optionally of the modulus of rupture, the thickness swell%, or a combination thereof of the corresponding engineered wood.
Example 47 provides the engineered wood of any one of Examples 45 or 46, wherein the modulus of rupture, the thickness swell%, modulus of elasticity, or a combination thereof of the engineered wood is within 1% to 5% optionally to the modulus of rupture, the thickness swell%, or a combination thereof of the corresponding engineered wood.
Example 48 provides the engineered wood of any one of Examples 45-47, wherein the modulus of rupture, the thickness swell%, modulus of elasticity, or a combination thereof of the engineered wood is identical to optionally the modulus of rupture, the thickness swell%, or a combination thereof of the corresponding engineered wood.
Example 49 provides the engineered wood of any one of Examples 35-48, wherein the reaction product of the engineered wood precursor is homogenously distributed about the plurality of wood fibers.
Example 50 provides the engineered wood of any one of Examples 35-49, further comprising a swell-retardant agent distributed about the engineered wood.
Example 51 provides the engineered wood of Example 50, wherein the wax component is present in the engineered in a range of from 0.1 wt% to 1 wt% of the wood substrate.
Example 52 provides the engineered wood of any one of Examples 35-51 wherein the engineered wood is at least 1.2 meters wide and at least 2.8 meters long.
Example 53 provides the engineered wood of any one of Examples 35-51 wherein the engineered wood is at least 1.3 meters wide and at least 2.1 meters long.
Example 54 provides a method of making an engineered wood, the method comprising:
   (a) mixing a carbohydrate-containing component and a base and optionally borax to produce a first mixture;
   (b) mixing the first mixture produced at (a) with a plurality of wood substrates to obtain a second mixture;
   (c) mixing the second mixture produced at (b) with a polypeptide-containing component to form a third mixture; and
   (d) curing the third mixture formed at (c) to form the engineered wood.
Example 55 provides the method of Example 54, further comprising mixing the plurality of wood substrates with a swell-retardant component.
Example 56 provides the method of any one of Examples 54-55, wherein mixing at (b) is performed by spraying the carbohydrate-containing component and base and optional borax, an optional sodium sulfite, an optional sodium bisulfite, an optional sodium metabisulfite, or an optional mixture thereof, to the plurality of wood substrates .
Example 57 provides the method of any one of Examples 54-56, wherein the polypeptide-containing component at (c) is in a powder form.
Example 58 provides the method of any one of Examples 54-57, further comprising mixing sodium sulfite, sodium bisulfite, sodium metabisulfite, or a mixture thereof at (a), (b) (c), or a combination thereof.
Example 59 provides the method of any one of Examples 54-58, wherein mixing at (b) is performed for at least 1 minute.
Example 60 provides the method of any one of Examples 54-59, wherein mixing at (b) is performed for a time in a range of from 1 minute to 60 minutes.
Example 61 provides the method of any one of Examples 54-60, wherein mixing at (b) is performed for a time in a range of from 1 minute to 10 minutes.
Example 62 provides the method of any one of Examples 54-61, wherein mixing at (c) is performed for at least 1 minute.
Example 63 provides the method of any one of Examples 54-62, wherein mixing at (c) is performed for a time in a range of from 1 minute to 60 minutes.
Example 64 provides the method of any one of Examples 54-63, wherein mixing at (c) is performed for a time in a range of from 1 minute to 10 minutes.
Example 65 provides the method of any one of Examples 54-64, further comprising aging the first mixture obtained at (a) for at least 1, for example at least 26 hours before performing (b).
Example 66 provides the method of any one of Examples 54-65, further comprising aging the first mixture obtained at (a) for at least 50 hours before performing (b).
Example 67 provides the method of any one of Examples 54-66, further comprising aging the first mixture obtained at (a) for at least 120 hours before performing (b).
Example 68 provides the method of any one of Examples 54-67, further comprising aging the first mixture obtained at (a) for at time in a range of from 0.5 hours to 9 months, for example between 26 hours to 6 months, or 1 week to 3 months before performing (b).
Example 69 provides the method of any one of Examples 54-68, further comprising aging the first mixture obtained at (a) for at time in a range of from 50 hours 360 hours before performing (b).
Example 70 provides the method of any one of Examples 54-69, wherein curing at (d) comprises:
   (e) hot pressing the third mixture formed at (c).
Example 71 provides the method of Example 69, wherein hot pressing at (e) is performed at a pressure of at most 500 psi.
Example 72 provides the method of any one of Examples 70-71, wherein hot pressing at (e) is performed at a pressure in a range of from 5 psi to 450 psi.
Example 73 provides the method of any one of Examples 70-72, wherein hot pressing at (e) is performed at a pressure in a range of from 30 psi to 400 psi.
Example 74 provides the method of any one of Examples 70-73, wherein a temperature of a platen of the press used for hot pressing at (e) is heated to a temperature in a range of at least 100 °C.
Example 75 provides the method of any one of Examples 70-74, wherein a temperature of a platen of the press used for hot pressing at (e) is heated to a temperature in a range of at least 120 °C.
Example 76 provides the method of any one of Examples 70-75, wherein a temperature of a platen of the press used for hot pressing at (e) is heated to a temperature in a range of from 100 °C to 220 °C or in a range of from 100 °C to 250 °C or from 100 °C to 225 °C, for example, from 145 °C to 225 °C or from 160 °C to 220 °C.
Example 77 provides the method of any one of Examples 70-76, wherein a temperature of a platen of the press used for hot pressing at (e) is heated to a temperature in a range of from 148 °C to 220 °C.
Example 78 provides the method of any one of Examples 70-77, wherein a temperature of a platen of the press used for hot pressing at (e) is heated to a temperature in a range of from 120 °C to 125 °C.
Example 79 provides the method of any one of Examples 54-78, further comprising (f) pressing at an ambient temperature.
Example 80 provides the method of any one of Examples 54-79, wherein the third mixture is present in a range of from 3 parts to 25 parts per 100 parts of the dry weight of the plurality of wood substrates.
Example 81 provides the method of any one of Examples 54-80, wherein the first mixture produced at (a) is aqueous and the carbohydrate containing component is in a range of from 2 wt% to 85 wt% based on a dry weight of the polypeptide-containing component, base, carbohydrate-component, and optional borax, optional sodium sulfite, optional sodium bisulfite, optional sodium metabisulfite, or optional mixture thereof, the carbohydrate-containing component comprising glucose, fructose, sucrose, or a mixture thereof, and the combined wt% of glucose, fructose, sucrose, or mixture thereof in the carbohydrate-containing component is at least 60 wt%.
Example 82 provides the method of any one of Examples 54-81, wherein the first mixture produced at (a) is aqueous and comprises 1 wt% to 33 wt% of the base based on the dry weight of polypeptide-containing component, base, carbohydrate-component, and optional borax, optional sodium sulfite, optional sodium bisulfite, optional sodium metabisulfite, or optional mixture thereof, wherein a pH of the second mixture greater than 10, for example 10.5, 11, 11.5, 12, 12.5, 13, 13.5, or 14.
Example 83 provides the method of any one of Example 54-82, wherein the polypeptide component is selected from soy flour, wheat gluten, or a combination thereof and is in a range of from 20 wt% to 85 wt% based on the dry weight of polypeptide-containing component, base, carbohydrate-component, and optional borax, optional sodium sulfite, optional sodium bisulfite, optional sodium metabisulfite, or optional mixture thereof.
Example 84 provides the method of any one of Examples 54-83, wherein the carbohydrate-containing component is in a range of from 15 wt% to 65 wt% based on the dry weight of polypeptide-containing component, base, carbohydrate-component, and optional borax, optional sodium sulfite, optional sodium bisulfite, optional sodium metabisulfite, or optional mixture thereof.
Example 85 provides the method of any one of Examples 54-84, wherein the carbohydrate-containing component comprises a glucose syrup, high fructose corn syrup, a sucrose-containing composition, or a mixture thereof.
Example 86 provides the method of any one of Examples 54-84, wherein the carbohydrate-containing component comprises glucose, fructose or mixtures thereof and the total weight percent of glucose and fructose is in the range of 20 wt% to 60 wt% based on the dry weight of polypeptide-containing component, base, carbohydrate-component, and optional borax, optional sodium sulfite, optional sodium bisulfite, optional sodium metabisulfite, or optional mixture thereof.
Example 87 provides the method of any one of Examples 54-86, wherein the carbohydrate-containing component comprises glucose, fructose or mixtures thereof.
Example 88 provides the method of any one of Examples 54-87, wherein the polypeptide-containing component comprises soy flour, wherein the soy flour has from 40 wt% to 65 wt% protein based on the total soy flour present.
Example 89 provides the method of any one of Examples 54-88, wherein the polypeptide-containing component comprises soy flour and comprises from 20 wt% to 85 wt% of the dry weight of the dry weight of polypeptide-containing component, base, carbohydrate-component, and optional borax, optional sodium sulfite, optional sodium bisulfite, optional sodium metabisulfite, or optional mixture thereof.
Example 90 provides the method of any one of Examples 54-89, wherein the soy flour comprises from 30 wt% to 80 wt% of the dry weight of polypeptide-containing component, base, carbohydrate-component, and optional borax, optional sodium sulfite, optional sodium bisulfite, optional sodium metabisulfite, or optional mixture thereof.
Example 91 provides the method of any one of Examples 82-83, wherein the pH is in a range of from 10 to 14.
Example 92 provides the method of any one of Examples 82-83, wherein the pH is in a range of from 11 to 14.
Example 93 provides the method of any one of Examples 54-92, wherein the base comprises NaOH, magnesium oxide, or mixtures thereof.
Example 94 provides the method of any one of Examples 54-93, wherein the base comprises NaOH.
Example 95 provides the method of any one of Examples 54-94, wherein the carbohydrate-containing component comprises a glucose syrup having a dextrose equivalent (DE) of at least 60.
Example 96 provides the method of any one of Examples 54-94, wherein the carbohydrate-containing component comprises a glucose syrup having a dextrose equivalent (DE) of at least 80, for example, at least 85, at least 90, at least 95.
Example 97 provides the method of any one of Examples 54-96, wherein the carbohydrate-containing component comprises a high fructose corn syrup comprising at least 90 wt% fructose and glucose.
Example 98 provides the method of Example 97, wherein the high fructose corn syrup comprises at least 94 wt% fructose and glucose.
Example 99 provides the method of any one of Examples 97-98, wherein the high fructose corn syrup comprises from 30 wt% to 70 wt% glucose.
Example 100 provides the method of any one of Examples 97-99, wherein the high fructose corn syrup comprises from 35 wt% to 65 wt% glucose.
Example 101 provides the method of any one of Examples 54-100, wherein the polypeptide-containing component further comprises a protein sourced from an animal protein, a casein salt, a plant protein, a soy flour, linseed flour, flaxseed flour, cottonseed flour, canola flour, sunflower flour, peanut flour, lupin flour, pea flour, and mixtures thereof.
Example 102 provides the method of any one of Examples 54-101, wherein the polypeptide-containing component comprises a soy flour.
Example 103 provides the method of Example 102, wherein the soy flour has a protein dispersibility index of at least 60.
Example 104 provides the method of any one of Examples 54-103, wherein the soy flour has a protein dispersibility index (PDI) in a range of from 70 to 95, for example a PDI from 80 to 90.
Example 105 provides the method of any one of Examples 54-104, wherein the polypeptide-containing component passes through a screen sized 100-mesh screen to a 635-mesh screen.
Example 106 provides the method of any one of Examples 54-105, wherein the polypeptide-containing component passes through a screen sized 100-mesh screen to a 400-mesh screen, for example a screen size of from 150 to 325.
Example 107 provides the method of any one of Examples 54-106, wherein the plurality of wood substrates comprise one or more strands, one or more particles, one or more fibers, or a mixture thereof.
Example 108 provides the method of any one of Examples 54-107, wherein the mixture(s) produced at (a), (b), (c), or a combination thereof comprises less than 5 wt% of urea-formaldehyde, or a mixture thereof.
Example 109 provides the method of any one of Examples 54-108, wherein the mixture(s) produced at (a), (b), (c), or a combination thereof is substantially free of urea-formaldehyde, or a mixture thereof.
Example 110 provides the method of any one of Examples 54-109, wherein the mixture(s) produced at (a), (b), (c), or a combination thereof further comprises sodium sulfite, sodium bisulfite, sodium metabisulfite, or a mixture thereof.
Example 111 provides the method of any one of Examples 54-110, wherein the engineered wood comprises particle board, medium density fiber board, high density fiberboard, oriented strand board, engineered wood flooring, and combinations thereof.
Example 112 provides the method of any one of Examples 54-111, wherein a modulus of rupture of the engineered wood is in a range of from 0.5 N/mm² to 25 N/mm².
Example 113 provides the method of any one of Examples 54-112, wherein a modulus of rupture of the engineered wood is in a range of from 2 N/mm² to 22 N/mm².
Example 114 provides the method of any one of Examples 54-113, wherein a thickness swell% of the engineered wood measured after soaking the engineered wood in water for two hours is in a range of from 5% to 45%.
Example 115 provides the method of any one of Examples 54-114, wherein a thickness swell% of the engineered wood measured after soaking the engineered wood in water for two hours is in a range of from 20% to 40%.
Example 116 provides the method of any one of Examples 54-115, wherein a modulus of elasticity of the engineered wood is in a range of from 200 N/mm² to 3000 N/mm².
Example 117 provides the method of any one of Examples 54-116, wherein a modulus of elasticity of the engineered wood is in a range of from 500 N/mm² to 2750 N/mm².
Example 118 provides the method of any one of Examples 112-117, wherein the modulus of rupture, the thickness swell%, modulus of elasticity, or a combination thereof of the engineered wood is substantially similar to optionally a modulus of rupture, a thickness swell%, or a combination thereof of a corresponding engineered wood differing in that the reaction product comprises urea-formaldehyde, or a mixture thereof.
Example 119 provides the method of Example 118, wherein the modulus of rupture, the thickness swell%, modulus of elasticity, or a combination thereof of the engineered wood is within 1% to 10% optionally of the modulus of rupture, the thickness swell%, or a combination thereof of the corresponding engineered wood.
Example 120 provides the method of any one of Examples 118 or 119, wherein the modulus of rupture, the thickness swell%, modulus of elasticity, or a combination thereof of the engineered wood is within 1% to 5% optionally to the modulus of rupture, the thickness swell%, or a combination thereof of the corresponding engineered wood.
Example 121 provides the method of any one of Examples 112-120, wherein the modulus of rupture, the thickness swell%, modulus of elasticity, or a combination thereof of the engineered wood is identical to optionally the modulus of rupture, the thickness swell%, or a combination thereof of the corresponding engineered wood.
Example 122 provides the engineered wood precursor mixture of any one of claims 1-54, further comprising borax.
Example 123 provides the engineered wood precursor mixture of Example 122, wherein the borax is in a range of from 1 wt% to 15 wt%, based on the dry weight of the binder reaction mixture.
Example 124 provides the engineered wood precursor mixture of any one of Examples 122 or 123, wherein the borax is in a range of from 3 wt% to 6 wt%, based on the dry weight of the binder reaction mixture.
The present invention is now described with reference to the following clauses:
1. An engineered wood precursor mixture comprising:
   a plurality of wood substrates;
   a binder reaction mixture present in a range of from 3 parts to 25 parts per 100 parts of the dry weight of the plurality of wood substrates, the binder composition comprising:
      an aqueous portion comprising:
         a carbohydrate-containing component in a range of from 2 wt% to 85 wt% based on a dry weight of the binder reaction mixture, the carbohydrate-containing component comprising glucose, fructose, sucrose, or a mixture thereof, and the combined wt% of glucose, fructose, sucrose, or mixture thereof in the carbohydrate-containing component is at least 60 wt%; and
         1 wt% to 33 wt% of a base based on a dry weight of the binder reaction mixture, wherein a pH of the aqueous portion is greater than 10, for example 10.5, 11, 11.5, 12, 12.5, 13, 13.5, or 14, or for example, 10 to 14 or 11 to 14; and
   an at least partially non-dissolved polypeptide-containing component selected from soy flour, wheat gluten, or a combination thereof, in a range of from 20 wt% to 85 wt% based on the dry weight of the binder reaction mixture.
2. The engineered wood precursor mixture of clause 1, wherein the carbohydrate-containing component is in a range of from 15 wt% to 65 wt% based on the dry weight of the binder reaction mixture.
3. The engineered wood precursor mixture of any one of clauses 1 or 2, wherein the carbohydrate-containing component comprises a glucose syrup, high fructose corn syrup, a sucrose-containing composition, or a mixture thereof.
4. The engineered wood precursor mixture of any one of clauses 1-3, wherein the carbohydrate-containing component comprises glucose, fructose or mixtures thereof and the total weight percent of glucose and fructose is in the range of 20 wt% to 60 wt% based on dry weight of the binder reaction mixture.
5. The engineered wood precursor mixture of any one of clauses 1-4, wherein the carbohydrate-containing component comprises glucose, fructose or mixtures thereof.
6. The engineered wood precursor mixture of any one of clauses 1-5, wherein the polypeptide-containing component comprises soy flour, wherein the soy flour has from 40 wt% to 65 wt% protein based on the total soy flour present.
7. The engineered wood precursor mixture of any one of clauses 1-6, wherein the polypeptide-containing component comprises soy flour and comprises from 20 wt% to 85 wt% of the dry weight of the binder reaction mixture.
8. The engineered wood precursor mixture of clause 7, wherein the soy flour comprises from 30 wt% to 80 wt% of the dry weight the binder reaction mixture.
9. The engineered wood precursor mixture of any one of clauses 1-8, wherein the pH of the aqueous portion is in a range of from 10 to 14.
10. The engineered wood precursor mixture of any one of clauses 1-9, wherein the pH of the aqueous portion is in a range of from 11 to 14.
11. The engineered wood precursor mixture of any one of clauses 1-10, wherein the base comprises NaOH, magnesium oxide, or mixtures thereof.
12. The engineered wood precursor mixture of any one of clauses 1-11, wherein the base comprises NaOH.
13. The engineered wood precursor mixture of any one of clauses 1-12, wherein the carbohydrate-containing component comprises a glucose syrup having a dextrose equivalent (DE) of at least 60.
14. The engineered wood precursor mixture of any one of clauses 1-12, wherein the carbohydrate-containing component comprises a glucose syrup having a dextrose equivalent (DE) of at least 80, for example, at least 85, at least 90, at least 95.
15. The engineered wood precursor mixture of any one of clauses 1-14, wherein the carbohydrate-containing component comprises a high fructose corn syrup comprising at least 90 wt% fructose and glucose.
16. The engineered wood precursor mixture of clause 15, wherein the high fructose corn syrup comprises at least 94 wt% fructose and glucose.
17. The engineered wood precursor or mixture of any one of clauses 15-16, wherein the high fructose corn syrup comprises from 30 wt% to 70 wt% glucose.
18. The engineered wood precursor mixture of any one of clauses 15-17, wherein the high fructose corn syrup comprises from 35 wt% to 65 wt% glucose.
19. The engineered wood precursor mixture of any one of clauses 1-18, wherein the polypeptide-containing component further comprises a protein sourced from an animal protein, a casein salt, a plant protein, a soy flour, linseed flour, flaxseed flour, cottonseed flour, canola flour, sunflower flour, peanut flour, lupin flour, pea flour, and mixtures thereof.
20. The engineered wood precursor mixture of any one of clauses 1-19, wherein the polypeptide-containing component comprises a soy flour.
21. The engineered wood precursor mixture of clause 20, wherein the soy flour has a protein dispersibility index of at least 60.
22. The engineered wood precursor mixture of any one of clauses 1-21 wherein the soy flour has a protein dispersibility index (PDI) in a range of from 70 to 95, for example a PDI from 80 to 90.
23. The engineered wood precursor mixture of any one of clauses 1-22, wherein the polypeptide-containing component passes through a screen sized 100-mesh screen to a 635-mesh screen.
24. The engineered wood precursor mixture of any one of clauses 1-23, wherein the polypeptide-containing component passes through a screen sized 100-mesh screen to a 400-mesh screen, for example a screen size of from 150 to 325.
25. The engineered wood precursor mixture of any one of clauses 1-24, wherein the plurality of wood substrates comprise one or more strands, one or more particles, one or more fibers, or a mixture thereof.
26. The engineered wood precursor mixture of clause 25, wherein the base is in a range of from 3 wt% to 21 wt% based on the dry weight of the binder reaction mixture.
27. The engineered wood precursor mixture of any one of clauses 25 or 26, wherein the base is in a range of from 6 wt% to 15 wt% based on the dry weight of the binder reaction mixture.
28. The engineered wood precursor mixture of any one of clauses 1-27, wherein the mixture comprises less than 5 wt% of urea-formaldehyde, or a mixture thereof.
29. The engineered wood precursor mixture of any one of clauses 1-28, wherein the binder reaction mixture is substantially free of urea-formaldehyde, or a mixture thereof.
30. The engineered wood precursor mixture of any one of clauses 1-29 further comprising sodium sulfite, sodium bisulfite, sodium metabisulfite, or a mixture thereof.
31. The engineered wood precursor mixture of clause 30, wherein the sodium sulfite, sodium bisulfite, sodium metabisulfite, or a mixture thereof is present in a range of from 1 wt% to 10 wt%, based on the dry weight of the binder reaction mixture.
32. The engineered wood precursor mixture of any one of clauses 30 or 31, wherein the binder reaction mixture present in a range of from 8 parts to 17 parts per 100 parts of the dry weight of the plurality of wood substrates.
33. The engineered wood precursor mixture of any one of clauses 1-32, wherein a moisture content of the mixture applied to the plurality of wood substrates is in a range of from 7% to 25%.
34. The engineered wood precursor mixture of any one of clauses 1-33, wherein a moisture content of the mixture applied to the plurality of wood substrates is in a range of from 9% to 13%.
35. An engineered wood comprising a reaction product of the engineered wood precursor of any one of clauses 1-34.
36. The engineered wood of clause 35, wherein the engineered wood comprises particle board, medium density fiber board, high density fiberboard, oriented strand board, engineered wood flooring, and combinations thereof.
37. The engineered wood of any one of clauses 35 or 36, wherein the reaction product of the binder reaction mixture is in a range of from 3 parts to 25 parts per 100 parts of the dry weight of the plurality of wood substrates of the engineered wood.
38. The engineered wood of any one of clauses 35-37, wherein the reaction product of the binder reaction mixture is in a range of from 8 parts to 17 parts per 100 parts of the dry weight of the plurality of wood substrates of the engineered wood.
39. The engineered wood of any one of clauses 35-38, wherein a modulus of rupture of the engineered wood is in a range of from 0.5 N/mm² to 25 N/mm².
40. The engineered wood of any one of clauses 35-39, wherein a modulus of rupture of the engineered wood is in a range of from 2 N/mm² to 22 N/mm².
41. The engineered wood of any one of clauses 35-40, wherein a thickness swell% of the engineered wood measured after soaking the engineered wood in water for two hours is in a range of from 5% to 45%.
42. The engineered wood of any one of clauses 35-41, wherein a thickness swell% of the engineered wood measured after soaking the engineered wood in water for two hours is in a range of from 20% to 40%.
43. The engineered wood of any one of clauses 35-42, wherein a modulus of elasticity of the engineered wood is in a range of from 200 N/mm² to 3000 N/mm².
44. The engineered wood of any one of clauses 35-43, wherein a modulus of elasticity of the engineered wood is in a range of from 500 N/mm² to 2750 N/mm².
45. The engineered wood of any one of clauses 35-44, wherein the modulus of rupture, the thickness swell%, modulus of elasticity, or a combination thereof of the engineered wood is substantially similar to optionally a modulus of rupture, a thickness swell%, or a combination thereof of a corresponding engineered wood differing in that the reaction product comprises urea-formaldehyde, or a mixture thereof.
46. The engineered wood of clause 45, wherein the modulus of rupture, the thickness swell%, modulus of elasticity, or a combination thereof of the engineered wood is within 1% to 10% optionally of the modulus of rupture, the thickness swell%, or a combination thereof of the corresponding engineered wood.
47. The engineered wood of any one of clauses 45 or 46, wherein the modulus of rupture, the thickness swell%, modulus of elasticity, or a combination thereof of the engineered wood is within 1% to 5% optionally to the modulus of rupture, the thickness swell%, or a combination thereof of the corresponding engineered wood.
48. The engineered wood of any one of clauses 45-47, wherein the modulus of rupture, the thickness swell%, modulus of elasticity, or a combination thereof of the engineered wood is identical to optionally the modulus of rupture, the thickness swell%, or a combination thereof of the corresponding engineered wood.
49. The engineered wood of any one of clauses 35-48, wherein the reaction product of the engineered wood precursor is homogenously distributed about the plurality of wood fibers.
50. The engineered wood of any one of clauses 35-49, further comprising a swell-retardant agent distributed about the engineered wood.
51. The engineered wood of clause 50, wherein the wax component is present in the engineered in a range of from 0.1 wt% to 1 wt% of the wood substrate.
52. The engineered wood of any one of clauses 35-51 wherein the engineered wood is at least 1.2 meters wide and at least 2.8 meters long.
53. The engineered wood of any one of clauses 35-51 wherein the engineered wood is at least 1.3 meters wide and at least 2.1 meters long.
54. A method of making an engineered wood, the method comprising:
   (a) mixing a carbohydrate-containing component and a base to produce a first mixture and optionally borax, an optional sodium sulfite, an optional sodium bisulfite, an optional sodium metabisulfite, or an optional mixture thereof;
   (b) mixing the first mixture produced at (a) with a plurality of wood substrates to obtain a second mixture;
   (c) mixing the second mixture produced at (b) with a polypeptide-containing component to form a third mixture; and
   (d) curing the third mixture formed at (c) to form the engineered wood.
55. The method of clause 54, further comprising mixing the plurality of wood substrates with a swell-retardant component.
56. The method of any one of clauses 54-55, wherein mixing at (b) is performed by spraying the carbohydrate-containing component and base and optionally borax, an optional sodium sulfite, an optional sodium bisulfite, an optional sodium metabisulfite, or an optional mixture thereof, to the plurality of wood substrates.
57. The method of any one of clauses 54-56, wherein the polypeptide-containing component at (c) is in a powder form.
58. The method of any one of clauses 54-57, further comprising mixing sodium sulfite, sodium bisulfite, sodium metabisulfite or a mixture thereof at (a), (b) (c), or a combination thereof.
59. The method of any one of clauses 54-58, wherein mixing at (b) is performed for at least 1 minute.
60. The method of any one of clauses 54-59, wherein mixing at (b) is performed for a time in a range of from 1 minute to 60 minutes.
61. The method of any one of clauses 54-60, wherein mixing at (b) is performed for a time in a range of from 1 minute to 10 minutes.
62. The method of any one of clauses 54-61, wherein mixing at (c) is performed for at least 1 minute.
63. The method of any one of clauses 54-62, wherein mixing at (c) is performed for a time in a range of from 1 minute to 60 minutes.
64. The method of any one of clauses 54-63, wherein mixing at (c) is performed for a time in a range of from 1 minute to 10 minutes.
65. The method of any one of clauses 54-64, further comprising aging the first mixture obtained at (a) for at least 1, for example at least 26 hours before performing (b).
66. The method of any one of clauses 54-65, further comprising aging the first mixture obtained at (a) for at least 50 hours before performing (b).
67. The method of any one of clauses 54-66, further comprising aging the first mixture obtained at (a) for at least 120 hours before performing (b).
68. The method of any one of clauses 54-67, further comprising aging the first mixture obtained at (a) for at time in a range of from 0.5 hours to 9 months, for example between 26 hours to 6 months, or 1 week to 3 months before performing (b).
69. The method of any one of clauses 54-68, further comprising aging the first mixture obtained at (a) for at time in a range of from 50 hours 360 hours before performing (b).
70. The method of any one of clauses 54-69, wherein curing at (d) comprises:
   (e) hot pressing the third mixture formed at (c).
71. The method of clause 69, wherein hot pressing at (e) is performed at a pressure of at most 500 psi.
72. The method of any one of clauses 70-71, wherein hot pressing at (e) is performed at a pressure in a range of from 5 psi to 450 psi.
73. The method of any one of clauses 70-72, wherein hot pressing at (e) is performed at a pressure in a range of from 30 psi to 400 psi.
74. The method of any one of clauses 70-73, wherein a temperature of a platen of the press used for hot pressing at (e) is heated to a temperature in a range of at least 100 °C.
75. The method of any one of clauses 70-74, wherein a temperature of a platen of the press used for hot pressing at (e) is heated to a temperature in a range of at least 120 °C.
76. The method of any one of clauses 70-75, wherein a temperature of a platen of the press used for hot pressing at (e) is heated to a temperature in a range of from 100 °C to 220 °C or from 100 °C to 250 °C or from 100 °C to 225 °C, for example, from 145 °C to 225 °C or from 160 °C to 220 °C.
77. The method of any one of clauses 70-76, wherein a temperature of a platen of the press used for hot pressing at (e) is heated to a temperature in a range of from 148 °C to 220 °C.
78. The method of any one of clauses 70-77, wherein a temperature of a platen of the press used for hot pressing at (e) is heated to a temperature in a range of from 120 °C to 125 °C.
79. The method of any one of clauses 54-78, further comprising (f) pressing at an ambient temperature.
80. The method of any one of clauses 54-79, wherein the third mixture is present in a range of from 3 parts to 25 parts per 100 parts of the dry weight of the plurality of wood substrates.
81. The method of any one of clauses 54-80, wherein the first mixture produced at (a) is aqueous and the carbohydrate containing component is in a range of from 2 wt% to 85 wt% based on a dry weight of the polypeptide-containing component, base, carbohydrate-component, and optional borax, optional sodium sulfite, optional sodium bisulfite, optional sodium metabisulfite, or optional mixture thereof, the carbohydrate-containing component comprising glucose, fructose, sucrose, or a mixture thereof, and the combined wt% of glucose, fructose, sucrose, or mixture thereof in the carbohydrate-containing component is at least 60 wt%.
82. The method of any one of clauses 54-81, wherein the first mixture produced at (a) is aqueous and comprises 1 wt% to 33 wt% of the base based on the dry weight of polypeptide-containing component, base, carbohydrate-component, and optional borax, optional sodium sulfite, optional sodium bisulfite, optional sodium metabisulfite, or optional mixture thereof, wherein a pH of the second mixture greater than 10, for example 10.5, 11, 11.5, 12, 12.5, 13, 13.5, or 14, or for example, 10 to 14 or 11 to 14.
83. The method of any one of clauses 54-82, wherein the polypeptide component is selected from soy flour, wheat gluten, or a combination thereof and is in a range of from 20 wt% to 85 wt% based on the dry weight of polypeptide-containing component, base, carbohydrate-component, and optional borax optional sodium sulfite, optional sodium bisulfite, optional sodium metabisulfite, or optional mixture thereof.
84. The method of any one of clauses 54-83, wherein the carbohydrate-containing component is in a range of from 15 wt% to 65 wt% based on the dry weight of polypeptide-containing component, base, carbohydrate-component, and optional borax, optional sodium sulfite, optional sodium bisulfite, optional sodium metabisulfite, or optional mixture thereof.
85. The method of any one of clauses 54-84, wherein the carbohydrate-containing component comprises a glucose syrup, high fructose corn syrup, a sucrose-containing composition, or a mixture thereof.
86. The method of any one of clauses 54-84, wherein the carbohydrate-containing component comprises glucose, fructose or mixtures thereof and the total weight percent of glucose and fructose is in the range of 20 wt% to 60 wt% based on the dry weight of polypeptide-containing component, base, carbohydrate-component, and optional borax, optional sodium sulfite, optional sodium bisulfite, optional sodium metabisulfite, or optional mixture thereof.
87. The method of any one of clauses 54-86, wherein the carbohydrate-containing component comprises glucose, fructose or mixtures thereof.
88. The method of any one of clauses 54-87, wherein the polypeptide-containing component comprises soy flour, wherein the soy flour has from 40 wt% to 65 wt% protein based on the total soy flour present.
89. The method of any one of clauses 54-88, wherein the polypeptide-containing component comprises soy flour and comprises from 20 wt% to 85 wt% of the dry weight of the dry weight of polypeptide-containing component, base, carbohydrate-component, and optional borax, optional sodium sulfite, optional sodium bisulfite, optional sodium metabisulfite, or optional mixture thereof.
90. The method of any one of clauses 54-89, wherein the polypeptide-containing component comprises soy flour and comprises from 30 wt% to 80 wt% of the dry weight of polypeptide-containing component, base, carbohydrate-component, and optional borax, optional sodium sulfite, optional sodium bisulfite, optional sodium metabisulfite, or optional mixture thereof.
91. The method of any one of clauses 82-90, wherein the pH is in a range of from 10 to 14.
92. The method of any one of clauses 82-90, wherein the pH is in a range of from 11 to 14.
93. The method of any one of clauses 54-92, wherein the base comprises NaOH, magnesium oxide, or mixtures thereof.
94. The method of any one of clauses 54-93, wherein the base comprises NaOH.
95. The method of any one of clauses 54-94, wherein the carbohydrate-containing component comprises a glucose syrup having a dextrose equivalent (DE) of at least 60.
96. The method of any one of clauses 54-95, wherein the carbohydrate-containing component comprises a glucose syrup having a dextrose equivalent (DE) of at least 80, for example, at least 85, at least 90, at least 95.
97. The method of any one of clauses 54-96, wherein the carbohydrate-containing component comprises a high fructose corn syrup comprising at least 90 wt% fructose and glucose.
98. The method of clause 97, wherein the high fructose corn syrup comprises at least 94 wt% fructose and glucose.
99. The method of any one of clauses 97-99, wherein the high fructose corn syrup comprises from 30 wt% to 70 wt% glucose.
100. The method of any one of clauses 97-100, wherein the high fructose corn syrup comprises from 35 wt% to 65 wt% glucose.
101. The method of any one of clauses 54-100, wherein the polypeptide-containing component further comprises a protein sourced from an animal protein, a casein salt, a plant protein, a soy flour, linseed flour, flaxseed flour, cottonseed flour, canola flour, sunflower flour, peanut flour, lupin flour, pea flour, and mixtures thereof.
102. The method of any one of clauses 54-102, wherein the polypeptide-containing component comprises a soy flour.
103. The method of clause 102, wherein the soy flour has a protein dispersibility index of at least 60.
104. The method of any one of clauses 54-102, wherein the polypeptide-containing component comprises a soy flour and wherein the soy flour has a protein dispersibility index (PDI) in a range of from 70 to 95, for example a PDI from 80 to 90.
105. The method of any one of clauses 54-104, wherein the polypeptide-containing component passes through a screen sized 100-mesh screen to a 635-mesh screen.
106. The method of any one of clauses 54-105, wherein the polypeptide-containing component passes through a screen sized 100-mesh screen to a 400-mesh screen, for example a screen size of from 150 to 325.
107. The method of any one of clauses 54-106, wherein the plurality of wood substrates comprise one or more strands, one or more particles, one or more fibers, or a mixture thereof.
108. The method of any one of clauses 54-107, wherein the mixture(s) produced at (a), (b), (c), or a combination thereof comprises less than 5 wt% of urea-formaldehyde, or a mixture thereof.
109. The method of any one of clauses 54-108, wherein the mixture(s) produced at (a), (b), (c), or a combination thereof is substantially free of urea-formaldehyde, or a mixture thereof.
110. The method of any one of clauses 54-109, wherein the mixture(s) produced at (a), (b), (c), or a combination thereof further comprises sodium sulfite, sodium bisulfite, sodium metabisulfite, or a mixture thereof.
111. The method of any one of clauses 54-110, wherein the engineered wood comprises particle board, medium density fiber board, high density fiberboard, oriented strand board, engineered wood flooring, and combinations thereof.
112. The method of any one of clauses 54-111, wherein a modulus of rupture of the engineered wood is in a range of from 0.5 N/mm² to 25 N/mm².
113. The method of any one of clauses 54-112, wherein a modulus of rupture of the engineered wood is in a range of from 2 N/mm² to 22 N/mm².
114. The method of any one of clauses 54-113, wherein a thickness swell% of the engineered wood measured after soaking the engineered wood in water for two hours is in a range of from 5% to 45%.
115. The method of any one of clauses 54-114, wherein a thickness swell% of the engineered wood measured after soaking the engineered wood in water for two hours is in a range of from 20% to 40%.
116. The method of any one of clauses 54-115, wherein a modulus of elasticity of the engineered wood is in a range of from 200 N/mm² to 3000 N/mm².
117. The method of any one of clauses 54-116, wherein a modulus of elasticity of the engineered wood is in a range of from 500 N/mm² to 2750 N/mm².
118. The method of any one of clauses 112-117, wherein the modulus of rupture, the thickness swell%, modulus of elasticity, or a combination thereof of the engineered wood is substantially similar to optionally a modulus of rupture, a thickness swell%, or a combination thereof of a corresponding engineered wood differing in that the reaction product comprises urea-formaldehyde, or a mixture thereof.
119. The method of clause 118, wherein the modulus of rupture, the thickness swell%, modulus of elasticity, or a combination thereof of the engineered wood is within 1% to 10% optionally of the modulus of rupture, the thickness swell%, or a combination thereof of the corresponding engineered wood.
120. The method of any one of clauses 118 or 119, wherein the modulus of rupture, the thickness swell%, modulus of elasticity, or a combination thereof of the engineered wood is within 1% to 5% optionally to the modulus of rupture, the thickness swell%, or a combination thereof of the corresponding engineered wood.
121. The method of any one of clauses 113-120, wherein the modulus of rupture, the thickness swell%, modulus of elasticity, or a combination thereof of the engineered wood is identical to optionally the modulus of rupture, the thickness swell%, or a combination thereof of the corresponding engineered wood.
122. The engineered wood precursor mixture of any one of clauses 1-53, further comprising borax.
123. The engineered wood precursor mixture of clause 122, wherein the borax is in a range of from 1 wt% to 15 wt%, based on the dry weight of the binder reaction mixture.
124. The engineered wood precursor mixture of any one of clauses 122 or 123, wherein the borax is in a range of from 3 wt% to 6 wt%, based on the dry weight of the binder reaction mixture.

## Claims

1. A method of making an engineered wood, the method comprising:
(a) mixing a carbohydrate-containing component and a base to produce a first mixture and optionally borax, an optional sodium sulfite, an optional sodium bisulfite, an optional sodium metabisulfite, or an optional mixture thereof;
(b) mixing the first mixture produced at (a) with a plurality of wood substrates to obtain a second mixture;
(c) mixing the second mixture produced at (b) with a polypeptide-containing component to form a third mixture; and
(d) curing the third mixture formed at (c) to form the engineered wood.

2. The method of claim 1, further comprising:
(i) mixing the plurality of wood substrates with a swell-retardant component;
(ii) mixing sodium sulfite, sodium bisulfite, sodium metabisulfite or a mixture thereof at (a), (b) (c), or a combination thereof; and/or
(iii) aging the first mixture obtained at (a) for at least 1 hour, for example at least 26 hours before performing (b).

3. The method of any one of claims 1-2, wherein:
(i) mixing at (b) is performed by spraying the carbohydrate-containing component and base and optionally borax, an optional sodium sulfite, an optional sodium bisulfite, an optional sodium metabisulfite, or an optional mixture thereof, to the plurality of wood substrates; and/or
(ii) mixing at (b) is performed for at least 1 minute.

4. The method of any one of claims 1-3, wherein:
(i) the polypeptide-containing component at (c) is in a powder form; and/or
(ii) mixing at (c) is performed for at least 1 minute.

5. The method of any one of claims 1-4, wherein curing at (d) comprises:
(e) hot pressing the third mixture formed at (c);
wherein,
(i) the hot pressing at (e) is performed at a pressure of at most 500 psi; and/or
(ii) a temperature of a platen of the press used for the hot pressing at (e) is heated to a temperature in a range of at least 100 °C.

6. The method of any one of claims 1-5, further comprising (f) pressing at an ambient temperature.

7. The method of any one of claims 1-6, wherein the third mixture is present in a range of from 3 parts to 25 parts per 100 parts of the dry weight of the plurality of wood substrates.

8. The method of any one of claims 1-7, wherein the first mixture produced at (a) is aqueous and comprises:
(i) the carbohydrate containing component in a range of from 2 wt% to 85 wt% based on a dry weight of the polypeptide-containing component, base, carbohydrate-component, and optional borax, optional sodium sulfite, optional sodium bisulfite, optional sodium metabisulfite, or optional mixture thereof, the carbohydrate-containing component comprising glucose, fructose, sucrose, or a mixture thereof, and the combined wt% of glucose, fructose, sucrose, or mixture thereof in the carbohydrate-containing component is at least 60 wt%; and
(ii) 1 wt% to 33 wt% of the base based on the dry weight of polypeptide-containing component, base, carbohydrate-component, and optional borax, optional sodium sulfite, optional sodium bisulfite, optional sodium metabisulfite, or optional mixture thereof;
wherein a pH of the second mixture is greater from 10 to 14.

9. The method of any one of claims 1-8, wherein:
(i) the carbohydrate-containing component comprises glucose, fructose or mixtures thereof and the total weight percent of glucose and fructose is in the range of 20 wt% to 60 wt% based on the dry weight of polypeptide-containing component, base, carbohydrate-component, and optional borax, optional sodium sulfite, optional sodium bisulfite, optional sodium metabisulfite, or optional mixture thereof;
(ii) the carbohydrate-containing component comprises a glucose syrup having a dextrose equivalent (DE) of at least 60; and/or
(iii) the carbohydrate-containing component comprises a high fructose corn syrup comprising at least 90 wt% fructose and glucose.

10. The method of any one of claims 1-9, wherein the polypeptide-containing component comprises soy flour, wherein
(i) the soy flour has from 40 wt% to 65 wt% protein based on the total soy flour present;
(ii) the soy flour comprises from 30 wt% to 80 wt% of the dry weight of polypeptide-containing component, base, carbohydrate-component, and optional borax, optional sodium sulfite, optional sodium bisulfite, optional sodium metabisulfite, or optional mixture thereof; and/or
(iii) the soy flour has a protein dispersibility index (PDI) in a range of from 70 to 95.

11. The method of any one of claims 1-10, wherein the pH of the second mixture is in a range of from 11 to 14.

12. The method of any one of claims 1-11, wherein the base comprises NaOH, magnesium oxide, or mixtures thereof.

13. The method of any one of claims 1-12, wherein the plurality of wood substrates comprise one or more strands, one or more particles, one or more fibers, or a mixture thereof.

14. The method of any one of claims 1-13, wherein the mixture(s) produced at (a), (b), (c), or a combination thereof further comprises sodium sulfite, sodium bisulfite, sodium metabisulfite, or a mixture thereof.

15. The method of any one of claims 1-14, wherein the engineered wood comprises particle board, medium density fiber board, high density fiberboard, oriented strand board, engineered wood flooring, and combinations thereof.
